# EUROPEAN PATENT APPLICATION

(11) **EP 4 654 664 A1**
(43) Date of publication of application: **26.11.2025**
(21) Application number: 24744061.3
(22) Date of filing: 02.01.2024
(51) Int. Cl.: H04W 36/00

(54) **REPORT GENERATION METHOD, INFORMATION TRANSMISSION METHOD, APPARATUS, TERMINAL, AND NODE**

(30) Priority: 20.01.2023 CN 202310061707
(71) Applicant: Datang Mobile Communications Equipment Co., Ltd., Beijing 100085 (CN)
(72) Inventor: WANG, Ruiwei, Beijing 100085 (CN); YAN, Xue, Beijing 100085 (CN)
(74) Representative: Studio Torta S.p.A.
(86) International application number: PCT/CN2024/070033
(87) International publication number: WO 2024/152884

(57) **Abstract**

Provided in the present disclosure are a report generation method and apparatus, an information transmission method and apparatus, a terminal and a node. The report generation method is performed by a terminal, and comprises: obtaining successful primary secondary cell (PSCell) report (SPR) trigger condition configuration information; and generating an SPR during a secondary node (SN) addition procedure or a PSCell change procedure according to the SPR trigger condition configuration information.

## Description

### CROSS-REFERENCE TO RELATED APPLICATION

The present disclosure claims a priority to the Chinese patent application No. 202310061707.2, titled as "report generation method, information transmission method, apparatus, terminal, and node", and filed to the China National Intellectual Property Administration on January 20, 2023, disclosure of which is incorporated herein by reference in its entirety.

### TECHNICAL FIELD

The present disclosure relates to the field of communication technologies, in particular to a report generation method and apparatus, an information transmission method and apparatus, a terminal and a node.

### BACKGROUND

In Release 18 (R18), the 3^{rd} Generation Partnership Project (3GPP) discusses the introduction of solutions for reporting successful primary secondary cell (PSCell) addition and change in a multi radio dual connection (MR-DC) scenario. However, related technical solutions cannot generate a successful PSCell report (SPR) in the MR-DC scenario, failing to achieve the optimization of network devices in the MR-DC scenario.

### SUMMARY

Embodiments of the present disclosure provide a report generation method and apparatus, an information transmission method and apparatus, a terminal and a node, so as to generate an SPR in an MR-DC scenario and achieve the optimization of network devices in the MR-DC scenario.

In order to solve the above technical problem, an embodiment of the present disclosure provides a report generation method performed by a terminal, the method including:
obtaining successful primary secondary cell (PSCell) report (SPR) trigger condition configuration information; and
generating an SPR during a secondary node (SN) addition procedure or a PSCell change procedure according to the SPR trigger condition configuration information.

Optionally, the SPR trigger condition configuration information includes: the SPR trigger condition configuration information configured by a master node (MN) and/or the SPR trigger condition configuration information configured by a preset SN; and
the preset SN includes a first SN and/or a second SN.

Optionally, the SPR trigger condition configuration information configured by the MN is obtained by:
receiving the SPR trigger condition configuration information configured by the MN and sent by the MN.

Optionally, the SPR trigger condition configuration information configured by the preset SN is obtained by:
receiving the SPR trigger condition configuration information configured by the first SN and sent by the first SN through a signaling radio bearer 3 (SRB3); or
receiving the SPR trigger condition configuration information configured by the preset SN and sent by the MN, wherein the SPR trigger condition configuration information configured by the preset SN is sent to the MN by the preset SN through an inter-node message.

Optionally, the generating the SPR during the SN addition procedure or the PSCell change procedure according to the SPR trigger condition configuration information includes:
in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN;
determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generating the SPR during the SN addition procedure or the PSCell change procedure according to the target SPR trigger condition configuration information.

Optionally, the obtaining the SPR trigger condition configuration information includes:
receiving the SPR trigger condition configuration information sent by an MN; or
receiving the SPR trigger condition configuration information sent by a first SN through an SRB3.

Optionally, the generating the SPR during the SN addition procedure or the PSCell change procedure according to the SPR trigger condition configuration information includes:
in a case that the SN addition procedure or the PSCell change procedure is to be executed, generating the SPR during the SN addition procedure or the PSCell change procedure according to the SPR trigger condition configuration information.

Optionally, the generating the SPR during the SN addition procedure or the PSCell change procedure according to the SPR trigger condition configuration information includes:
in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN; and
in a case that the SPR trigger condition configuration information corresponds to the trigger node, generating the SPR during the SN addition procedure or the PSCell change procedure according to the SPR trigger condition configuration information.

Optionally, the method further includes:
receiving configuration node information corresponding to the SPR trigger condition configuration information, wherein the configuration node information is sent by the MN or the first SN.

Optionally, the method further includes:
receiving first indication information sent by the MN and/or the first SN, wherein the first indication information is used for indicating the trigger node corresponding to the target cell triggering the PSCell change procedure.

Optionally, the receiving the first indication information sent by the MN includes:
receiving a first message sent by the MN, the first message carrying the first indication information;
wherein the first message includes at least one of a radio resource control (RRC) reconfiguration message or a PSCell change command; and
the PSCell change command is sent to the MN by the second SN through an inter-node message after receiving the first indication information sent by the MN.

Optionally, the method further includes:
receiving conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

An embodiment of the present disclosure further provides an information transmission method performed by a master node (MN), the method including:
sending successful primary secondary cell (PSCell) report (SPR) trigger condition configuration information to a terminal.

Optionally, the sending the SPR trigger condition configuration information to the terminal includes:
sending the SPR trigger condition configuration information configured by the MN and/or the SPR trigger condition configuration information configured by a preset secondary node (SN) to the terminal;
wherein the preset SN includes a first SN and/or a second SN.

Optionally, the method further includes:
receiving the SPR trigger condition configuration information configured by the preset SN and sent by the preset SN through an inter-node message.

Optionally, the sending the SPR trigger condition configuration information to the terminal includes:
negotiating the SPR trigger condition configuration information with a first SN; and
sending the negotiated SPR trigger condition configuration information to the terminal.

Optionally, the negotiating the SPR trigger condition configuration information with the first SN includes:
sending a second message to the first SN, wherein the second message includes the SPR trigger condition configuration information configured by the MN; or
receiving a third message sent by the first SN, wherein the third message includes the SPR trigger condition configuration information configured by the first SN.

Optionally, after the sending the second message to the first SN, the method further includes:
receiving a fourth message sent by the first SN, wherein the fourth message is used for indicating that the first SN acknowledges or rejects the SPR trigger condition configuration information configured by the MN.

Optionally, after the receiving the third message sent by the first SN, the method further includes:
sending a fifth message to the first SN, wherein the fifth message is used for indicating that the MN acknowledges or rejects the SPR trigger condition configuration information configured by the first SN.

Optionally, the method further includes:
sending configuration node information corresponding to the SPR trigger condition configuration information to the terminal.

Optionally, the method further includes:
sending first indication information to the terminal, wherein the first indication information is used for indicating a trigger node corresponding to a target cell triggering a PSCell change procedure, and the trigger node includes the MN or a first SN.

Optionally, the sending the first indication information to the terminal includes:
sending a first message to the terminal, the first message carrying the first indication information;
wherein the first message includes at least one of a radio resource control (RRC) reconfiguration message or a PSCell change command.

Optionally, in a case that the first message includes the PSCell change command, the method further includes:
sending first indication information to a second SN; and
receiving an inter-node message sent by the second SN, wherein the inter-node message carries the PSCell change command.

Optionally, the method further includes:
sending conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

An embodiment of the present disclosure further provides an information transmission method performed by a first secondary node (SN), the method including:
performing a first operation;
wherein the first operation includes one of:
   sending successful primary secondary cell (PSCell) report (SPR) trigger condition configuration information configured by the first SN to a terminal;
   sending the SPR trigger condition configuration information configured by the first SN to a master node (MN) through an inter-node message; and
   negotiating the SPR trigger condition configuration information with the MN.

Optionally, the method further includes:
sending first indication information to the terminal, wherein the first indication information is used for indicating a trigger node corresponding to a target cell triggering a PSCell change procedure;
wherein the trigger node includes the MN or the first SN.

Optionally, the method further includes:
sending conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure;
wherein the trigger node includes the MN or the first SN.

Optionally, the negotiating the SPR trigger condition configuration information with the MN includes:
receiving a second message sent by the MN, wherein the second message includes the SPR trigger condition configuration information configured by the MN; or
sending a third message to the MN, wherein the third message includes the SPR trigger condition configuration information configured by the first SN.

Optionally, after the receiving the second message sent by the MN, the method further includes:
sending a fourth message to the MN, wherein the fourth message is used for indicating that the first SN acknowledges or rejects the SPR trigger condition configuration information configured by the MN.

Optionally, after the sending the third message to the MN, the method further includes:
receiving a fifth message sent by the MN, wherein the fifth message is used for indicating that the MN acknowledges or rejects the SPR trigger condition configuration information configured by the first SN.

An embodiment of the present disclosure further provides an information transmission method performed by a second secondary node (SN), the method including:
sending successful primary secondary cell (PSCell) report (SPR) trigger condition configuration information configured by the second SN to a master node (MN) through an inter-node message.

Optionally, the method further includes:
receiving first indication information sent by the MN, wherein the first indication information is used for indicating a trigger node corresponding to a target cell triggering a PSCell change procedure, and the trigger node includes the MN or a first SN; and
sending the inter-node message to the MN, wherein the inter-node message carries a PSCell change command that includes the first indication information.

An embodiment of the present disclosure further provides a terminal, including a memory, a transceiver, and a processor:
the memory is configured to store a computer program; the transceiver is configured to transmit and receive data under the control of the processor; and the processor is configured to read the computer program in the memory and perform the following steps:
obtaining successful primary secondary cell (PSCell) report (SPR) trigger condition configuration information; and
generating an SPR during a secondary node (SN) addition procedure or a PSCell change procedure according to the SPR trigger condition configuration information.

Optionally, the SPR trigger condition configuration information includes: the SPR trigger condition configuration information configured by a master node (MN) and/or the SPR trigger condition configuration information configured by a preset SN; and
the preset SN includes a first SN and/or a second SN.

Optionally, the processor is configured to read the computer program in the memory and perform the following step:
receiving, by the transceiver, the SPR trigger condition configuration information configured by the MN and sent by the MN.

Optionally, the processor is configured to read the computer program in the memory and perform the following steps:
receiving, by the transceiver, the SPR trigger condition configuration information configured by the first SN and sent by the first SN through a signaling radio bearer 3 (SRB3); or
receiving, by the transceiver, the SPR trigger condition configuration information configured by the preset SN and sent by the MN, wherein the SPR trigger condition configuration information configured by the preset SN is sent to the MN by the preset SN through an inter-node message.

Optionally, the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN;
determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generating the SPR during the SN addition procedure or the PSCell change procedure according to the target SPR trigger condition configuration information.

Optionally, the processor is configured to read the computer program in the memory and perform the following steps:
receiving, by the transceiver, the SPR trigger condition configuration information sent by an MN; or
receiving, by the transceiver, the SPR trigger condition configuration information sent by a first SN through an SRB3.

Optionally, the processor is configured to read the computer program in the memory and perform the following step:
in a case that the SN addition procedure or the PSCell change procedure is to be executed, generating the SPR during the SN addition procedure or the PSCell change procedure according to the SPR trigger condition configuration information.

Optionally, the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN; and
in a case that the SPR trigger condition configuration information corresponds to the trigger node, generating the SPR during the SN addition procedure or the PSCell change procedure according to the SPR trigger condition configuration information.

Optionally, the processor is configured to read the computer program in the memory and perform the following step:
receiving, by the transceiver, configuration node information corresponding to the SPR trigger condition configuration information, wherein the configuration node information is sent by the MN or the first SN.

Optionally, the processor is configured to read the computer program in the memory and perform the following step:
receiving, by the transceiver, first indication information sent by the MN and/or the first SN, wherein the first indication information is used for indicating the trigger node corresponding to the target cell triggering the PSCell change procedure.

Optionally, the processor is configured to read the computer program in the memory and perform the following step:
receiving, by the transceiver, a first message sent by the MN, the first message carrying the first indication information;
wherein the first message includes at least one of a radio resource control (RRC) reconfiguration message or a PSCell change command;
the PSCell change command is sent to the MN by the second SN through an inter-node message after receiving the first indication information sent by the MN.

Optionally, the processor is configured to read the computer program in the memory and perform the following step:
receiving conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

An embodiment of the present disclosure further provides a master node (MN), including a memory, a transceiver and a processor:
the memory is configured to store a computer program; the transceiver is configured to transmit and receive data under the control of the processor; and the processor is configured to read the computer program in the memory and perform the following steps:
sending, by the transceiver, successful primary secondary cell (PSCell) report (SPR) trigger condition configuration information to a terminal.

Optionally, the processor is configured to read the computer program in the memory and perform the following step:
sending, by the transceiver, the SPR trigger condition configuration information configured by the MN and/or the SPR trigger condition configuration information configured by a preset secondary node (SN) to the terminal;
wherein the preset SN includes a first SN and/or a second SN.

Optionally, the processor is configured to read the computer program in the memory and perform the following step:
receiving, by the transceiver, the SPR trigger condition configuration information configured by the preset SN and sent by the preset SN through an inter-node message.

Optionally, the processor is configured to read the computer program in the memory and perform the following steps:
sending a second message to the first SN, wherein the second message includes the SPR trigger condition configuration information configured by the MN; or
receiving a third message sent by the first SN, wherein the third message includes the SPR trigger condition configuration information configured by the first SN.

Optionally, the processor is configured to read the computer program in the memory and perform the following step:
receiving, by the transceiver, a fourth message sent by the first SN, wherein the fourth message is used for indicating that the first SN acknowledges or rejects the SPR trigger condition configuration information configured by the MN.

Optionally, the processor is configured to read the computer program in the memory and perform the following step:
sending, by the transceiver, a fifth message to the first SN, wherein the fifth message is used for indicating that the MN acknowledges or rejects the SPR trigger condition configuration information configured by the first SN.

Optionally, the processor is configured to read the computer program in the memory and perform the following step:
sending, by the transceiver, configuration node information corresponding to the SPR trigger condition configuration information to the terminal.

Optionally, the processor is configured to read the computer program in the memory and perform the following step:
sending first indication information to the terminal, wherein the first indication information is used for indicating a trigger node corresponding to a target cell triggering a PSCell change procedure, and the trigger node includes the MN or a first SN.

Optionally, the processor is configured to read the computer program in the memory and perform the following steps:
sending, by the transceiver, a first message to the terminal, the first message carrying the first indication information;
wherein the first message includes at least one of a radio resource control (RRC) reconfiguration message or a PSCell change command.

Optionally, in a case that the first message includes the PSCell change command, the processor is configured to read the computer program in the memory and perform the following steps:
sending, by the transceiver, first indication information to a second SN; and
receiving, by the transceiver, an inter-node message sent by the second SN, wherein the inter-node message carries the PSCell change command.

Optionally, the processor is configured to read the computer program in the memory and perform the following step:
sending, by the transceiver, conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

An embodiment of the present disclosure further provides a secondary node (SN), which is a first SN, including a memory, a transceiver, and a processor:
the memory is configured to store a computer program; the transceiver is configured to transmit and receive data under the control of the processor; and the processor is configured to read the computer program in the memory and perform the following steps:
performing a first operation;
wherein the first operation includes one of:
   sending successful primary secondary cell (PSCell) report (SPR) trigger condition configuration information configured by the first SN to a terminal;
   sending the SPR trigger condition configuration information configured by the first SN to a master node (MN) through an inter-node message; and
   negotiating the SPR trigger condition configuration information with the MN.

Optionally, the processor is configured to read the computer program in the memory and perform the following step:
sending, by the transceiver, first indication information to the terminal, wherein the first indication information is used for indicating a trigger node corresponding to a target cell triggering a PSCell change procedure;
wherein the trigger node includes the MN or the first SN.

Optionally, the processor is configured to read the computer program in the memory and perform the following step:
sending, by the transceiver, conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure;
wherein the trigger node includes the MN or the first SN.

Optionally, the processor is configured to read the computer program in the memory and perform the following steps:
receiving, by the transceiver, a second message sent by the MN, wherein the second message includes the SPR trigger condition configuration information configured by the MN; or
sending, by the transceiver, a third message to the MN, wherein the third message includes the SPR trigger condition configuration information configured by the first SN.

Optionally, the processor is configured to read the computer program in the memory and perform the following step:
sending, by the transceiver, a fourth message to the MN, wherein the fourth message is used for indicating that the first SN acknowledges or rejects the SPR trigger condition configuration information configured by the MN.

Optionally, the processor is configured to read the computer program in the memory and perform the following step:
receiving, by the transceiver, a fifth message sent by the MN, wherein the fifth message is used for indicating that the MN acknowledges or rejects the SPR trigger condition configuration information configured by the first SN.

An embodiment of the present disclosure further provides a secondary node (SN), which is a second SN, including a memory, a transceiver, and a processor:
the memory is configured to store a computer program; the transceiver is configured to transmit and receive data under the control of the processor; and the processor is configured to read the computer program in the memory and perform the following step:
sending, by the transceiver, successful primary secondary cell (PSCell) report (SPR) trigger condition configuration information configured by the second SN to a master node (MN) through an inter-node message.

Optionally, the processor is configured to read the computer program in the memory and perform the following steps:
receiving, by the transceiver, first indication information sent by the MN, wherein the first indication information is used for indicating a trigger node corresponding to a target cell triggering a PSCell change procedure, and the trigger node includes the MN or a first SN; and
sending, by the transceiver, the inter-node message to the MN, wherein the inter-node message carries a PSCell change command that includes the first indication information.

An embodiment of the present disclosure further provides a report generation apparatus applied to a terminal, the apparatus including:
an obtaining unit configured to obtain successful primary secondary cell (PSCell) report (SPR) trigger condition configuration information; and
a generation unit configured to generate an SPR during a secondary node (SN) addition procedure or a PSCell change procedure according to the SPR trigger condition configuration information.

An embodiment of the present disclosure further provides an information transmission apparatus applied to a master node (MN), the apparatus including:
a first sending unit configured to send successful primary secondary cell (PSCell) report (SPR) trigger condition configuration information to a terminal.

An embodiment of the present disclosure further provides an information transmission apparatus applied to a first secondary node (SN), the apparatus including:
a performing unit configured to perform a first operation;
wherein the first operation includes one of:
   sending successful primary secondary cell (PSCell) report (SPR) trigger condition configuration information configured by the first SN to a terminal;
   sending SPR trigger condition configuration information configured by the first SN to a master node (MN) through an inter-node message; and
   negotiating the SPR trigger condition configuration information with the MN.

An embodiment of the present disclosure further provides an information transmission apparatus applied to a second secondary node (SN), the apparatus including:
a second sending unit configured to send successful primary secondary cell (PSCell) report (SPR) trigger condition configuration information configured by the second SN to a master node (MN) through an inter-node message.

An embodiment of the present disclosure further provides a processor-readable storage medium storing a computer program, wherein the computer program is configured to cause the processor to perform the method aforementioned.

The present disclosure has the following advantageous effects:
according to the above solutions, an SPR can be generated during an SN addition procedure or a PSCell change procedure based on SPR trigger condition configuration information, so that the SPR can be generated smoothly in an MR-DC scenario, and the optimization of network devices can be achieved in the MR-DC scenario.

### BRIEF DESCRIPTION OF THE DRAWINGS

In order to explain the technical solutions in the embodiments of the present disclosure or in the prior art more clearly, the drawings to be used in the description of the embodiments or the prior art will be briefly introduced below. Obviously, the drawings involved in the following description merely illustrate some embodiments of the present disclosure, and those of ordinary skill in the art can obtain other drawings from these drawing without paying any creative effort.
Fig. 1 illustrates an architecture diagram of an MR-DC control plane connected to 5GC in a dual connection.
Fig. 2 illustrates a flowchart of a handover.
Fig. 3 illustrates a flowchart of a PSCell addition (SN addition) procedure.
Fig. 4 illustrates a flowchart of a PSCell change procedure.
Fig. 5 illustrates a flowchart of a report generation method according to an embodiment of the present disclosure.
Fig. 6 illustrates a flowchart of an implementation of Step S502.
Fig. 7 illustrates another flowchart of an implementation of Step S502.
Fig. 8 illustrates a flowchart of an information transmission method according to an embodiment of the present disclosure.
Fig. 9 illustrates another flowchart of an information transmission method according to an embodiment of the present disclosure.
Fig. 10 illustrates yet another flowchart of an information transmission method according to an embodiment of the present disclosure.
Fig. 11 illustrates a schematic modular diagram of a report generation apparatus according to an embodiment of the present disclosure.
Fig. 12 illustrates a structural diagram of a terminal according to an embodiment of the present disclosure.
Fig. 13 illustrates a schematic modular diagram of an information transmission apparatus according to an embodiment of the present disclosure.
Fig. 14 illustrates a structural diagram of a master node according to an embodiment of the present disclosure.
Fig. 15 illustrates another schematic modular diagram of an information transmission apparatus according to an embodiment of the present disclosure.
Fig. 16 illustrates yet another schematic modular diagram of an information transmission apparatus according to an embodiment of the present disclosure.

### DETAILED DESCRIPTION

The technical solutions in the embodiments of the present disclosure will be clearly and thoroughly described below with reference to the drawings for the embodiments of the present disclosure. Obviously, those described are only parts, rather than all, of the embodiments of the present disclosure. Based on the embodiments of the present disclosure, any other embodiment obtained by those of ordinary skill in the art without paying any creative effort should fall within the protection scope of the present disclosure.

The terms such as "first" and "second" in the specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, system, product, or device.

In the embodiments of the present disclosure, the term "and/or" is only an association relationship that describes the associated objects, indicating that there may be three relationships. For example, A and/or B may mean that A exists alone, A and B both exist, and B exists alone. The character "/" generally indicates that the contextually associated objects are in an "or" relationship. In the embodiments of the present disclosure, the term "a plurality of" refers to two or more, and other quantifiers are similar.

In the embodiments of the present disclosure, the phrase such as "exemplary" or "for example" is used to indicate an example, an illustration, or an explanation. Any embodiment or design solution described with "exemplary" or "for example" in the embodiments of the present disclosure should not be construed as more preferable or more advantageous than any other embodiment or design solution. To be exact, the use of the word such as "exemplary" or "for example" is intended to present related concepts in a specific manner.

The related concepts mentioned in the present disclosure are briefly described below.

### I. Multiconnect (MC)

In a multi-connect architecture, user equipment (UE) may be connected to a master node (MN) and one or more secondary nodes (SNs), and perform signaling and/or data interaction with these network nodes. Both the MN and the SN may be Long Term Evolution (LTE)/Evolved Long Term Evolution (e-LTE)/New Radio (NR) nodes. When there is one MN and one SN, it may be called dual connection (DC).

When the UE is in a connected state, it may be connected to one or more network-side nodes, which may implement one or more radio access technologies (RATs). For example, when the MN is an LTE node and the SN is an NR node, it is (NG) EN-DC dual connection; when the MN is an NR node and the SN is an LTE node, it is NE-DC dual connection; and when both the MN and the SN are NR nodes, it is NR-NR-DC.

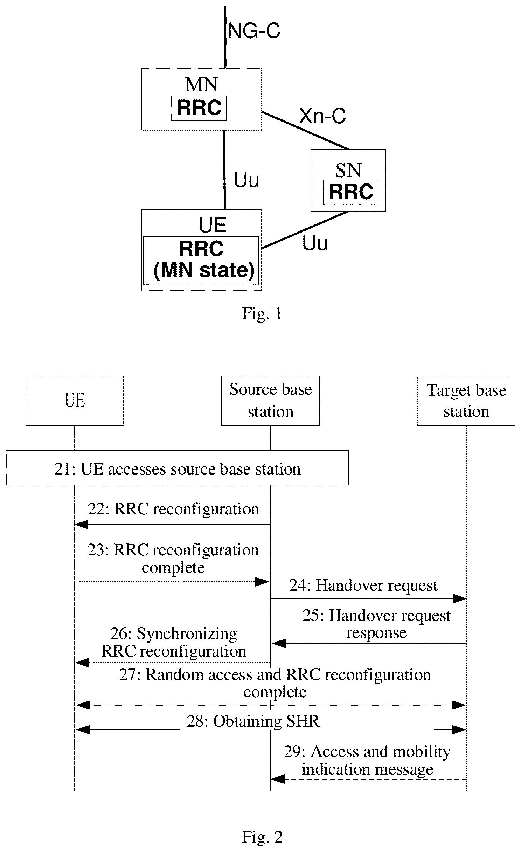

The DC is illustrated in Fig. 1.

The secondary cell group (SCG) is a serving cell group at the SN in the MR-DC, including one PSCell and possibly one or more Scells.

### II. Successful handover report (SHR)

In Release 17 (R17), the 3GPP introduces an SHR. The basic process is to configure trigger conditions before a handover is executed, and generate the SHR when the trigger conditions are met during the handover. The UE indicates a network to obtain and send the SHR to the related node for parameter analysis and optimization.

Configuration information of the trigger conditions of the SHR includes: a timer T304 threshold, a timer T310 threshold, a timer T312 threshold, and indication information of a radio link failure at a source side in a dualactive protocol stack (DAPS) handover procedure.

The timer T304 threshold, the timer T310 threshold, and the timer T312 threshold are specifically percentage values. For example, the timer T304 threshold configured as p40 represents 40%, indicating that when a current value of the running timer T304/a configured value in a handover command (synchronous RRC connection reconfiguration) during a handover is greater than 40%, the logging of the SHR will be triggered.

When the indication information of the radio link failure at the source side in the DAPS handover procedure is configured as true, it indicates that for a successful DAPS handover, a radio link failure occurs at a source side in the DAPS handover procedure, and the UE should log and report the SHR.

Fig. 2 illustrates a flowchart of an SHR in a handover procedure of a traditional or DAPS/conditional handover (CHO), which specifically includes the following steps 21 to 29.

Step 21: UE accesses a source base station.

Step 22 and Step 23: the source base station configures trigger conditions of the SHR through a radio resource control (RRC) reconfiguration procedure, and the trigger conditions of an SHR include a timer T310 threshold, a timer T312 threshold, and indication information of a radio link failure at a source side in a DAPS handover procedure.

Step 24 and Step 25: a handover target base station allocates handover resources, and for an SHR configuration, a target cell may also configure a trigger condition for triggering the SHR: a timer T304 threshold.

Step 26 and Step 27: a handover is executed from the source base station to the target base station, and when any one of the trigger conditions for triggering the SHR is met, the UE logs the SHR and notifies, in an RRC connection reconfiguration complete message, a network to obtain the SHR.

Step 28: the network obtains the SHR logged by the UE, and the target base station optimizes parameter configurations.

Step 29: when the source base station also requires parameter optimization, the target base station sends an access and mobility indication message carrying the SHR to the source base station.

In the case of a DAPS handover, when a radio link failure occurs at a source side during the DAPS handover but the DAPS handover succeeds, the UE logs the SHR and indicate the network to obtain the SHR.

The specific content of the SHR includes:
1) information of a source cell for handover: including a cell identifier of the source cell, a measurement result of the source cell, and indication information about whether a radio link failure occurs during the DAPS handover of the source cell;
2) information of a target cell for handover: including a cell identifier of the target cell and a measurement result of the target cell;
3) a measurement result of a neighboring cell;
4) location information of the UE;
5) time information: a time interval from the last reception of a conditional synchronized reconfiguration message by the UE to the execution of a conditional synchronized reconfiguration during the handover;
6) causes for triggering the SHR: including triggering by T304, triggering by T310, triggering by T312, and triggering by the radio link failure at the source side during the DAPS handover;
7) random access information;
8) interruption time of a user plane service for handover; and
9) a cell radio network temporary identifier (C-RNTI) allocated by the target cell.

Regarding the process of obtaining the SHR by the network: when the UE logs the SHR, the UE notifies the network that the UE has logged the SHR, through an RRC connection establishment complete message, or an RRC connection reestablishment complete message, or an RRC connection reconfiguration complete message, or an RRC connection recovery complete message. For example, in Step 27 in Fig. 2, the UE logs the SHR and notifies the network to obtain the SHR, through the RRC connection reconfiguration complete message. Through a UE information triggering process, the network obtains the SHR logged by the UE.

### III. Introduction of the procedure of a PSCell addition (SN addition)

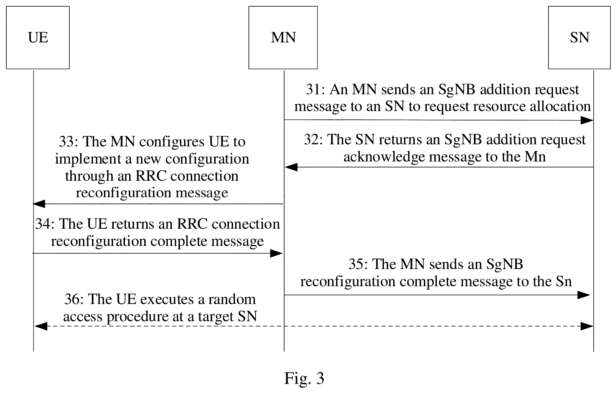

The PSCell addition (SN addition) is triggered by an MN, and Fig. 3 illustrates a flowchart in an EN-DC scenario.

The specific process includes:
Message 31: an MN sends an SgNB addition request message to an SN to request resource allocation;
Step 32: the SN returns an SgNB addition request acknowledge message to the Mn;
Message 33: the MN configures UE to implement a new configuration through an RRC connection reconfiguration message;
Step 34: a terminal returns an RRC connection reconfiguration complete message;
Message 35: the MN sends an SgNB reconfiguration complete message to the Sn; and
Message 36: the UE executes a random access procedure at a target SN.

### IV. Introduction of the procedure of a PSCell change

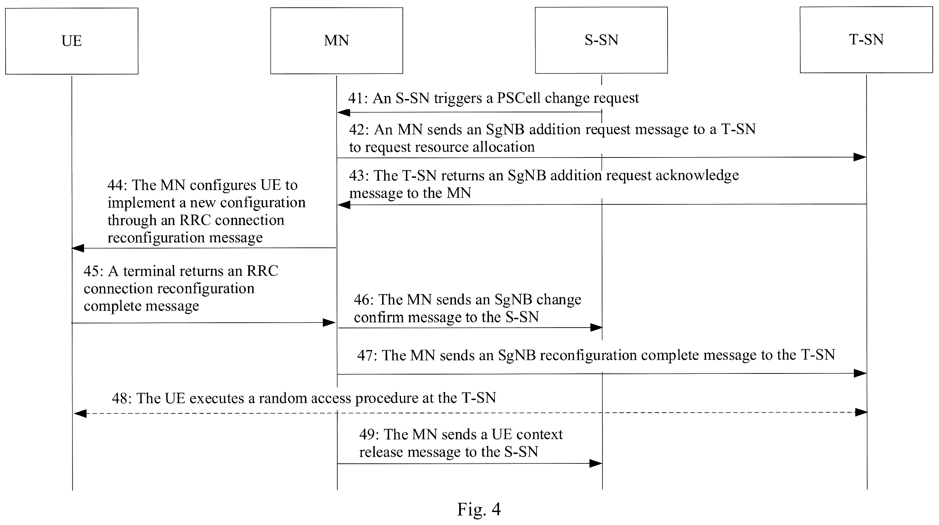

The PSCell change procedure may be triggered by an MN or an SN. Fig. 4 illustrates a PSCell change procedure triggered by an SN in an EN-DC scenario.

The specific process includes:
Message 41: a source SN (S-SN) triggers a PSCell change request;
Message 42: an MN sends an SgNB addition request message to a target SN (T-SN) to request resource allocation;
Step 43: the T-SN returns an SgNB addition request acknowledge message to the MN;
Message 44: the MN configures UE to implement a new configuration through an RRC connection reconfiguration message;
Step 45: a terminal returns an RRC connection reconfiguration complete message;
Message 46: the MN sends an SgNB change confirm message to the S-SN;
Message 47: the MN sends an SgNB reconfiguration complete message to the T-SN;
Message 48: the UE executes a random access procedure at the T-SN; and
Message 49: the MN sends a UE context release message to the S-SN.

### V. Introduction of a conditional PSCell addition/change

Upon reception of an ordinary synchronous reconfiguration message, the terminal immediately executes an SN addition (e.g., Message 3 in the PSCell addition procedure) or a PSCell change (e.g., Message 4 in the PSCell change procedure). But a conditional synchronized reconfiguration may be configured with a plurality of candidate cell lists and corresponding execution conditions. When receiving the conditional synchronized reconfiguration, the terminal does not execute the PSCell addition procedure or the PSCell change procedure immediately, but evaluates the execution conditions, and starts to execute the PSCell addition procedure or the PSCell change procedure of the corresponding candidate cell only when the execution conditions are met.

### VI. Introduction of the SPR

Similar to that the UE may generate the SHR during the handover at an MN side, the UE may also generate the SPR during the PSCell addition procedure, the PSCell change procedure, and the conditional PSCell addition/change procedure at an SCG side. The process of generation is also similar. The configurations of SPR trigger conditions include: a timer T304 threshold, a timer T310 threshold, and a timer T312 threshold.

The embodiments of the present disclosure are introduced below with reference to the drawings. A report generation method and apparatus, an information transmission method and apparatus, a terminal, and a node according to the embodiments of the present disclosure are applicable to a radio communication system, which may be a system adopting a 5^{th} Generation (5G) mobile communication technology (hereinafter collectively referred to as a 5G system), and those skilled in the art can understand that a 5G NR system is only an example rather than a limitation.

The embodiments of the disclosure provide a report generation method and apparatus, an information transmission method and apparatus, a terminal, and a node, so as to generate an SPR in an MR-DC scenario and achieve the optimization of a network device in the MR-DC scenario.

The method and the apparatus are based on the same concept. Since similar principles are adopted by the method and the apparatus to solve the problems, the implementations of the apparatus and the method can refer to each other, and the repeated content will be omitted.

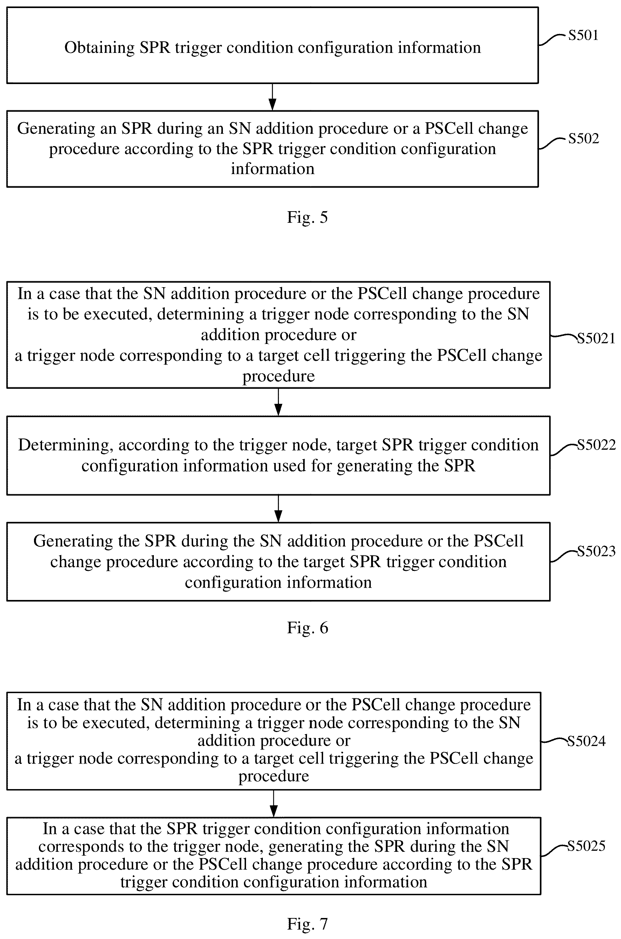

As illustrated in Fig. 5, an embodiment of the present disclosure provides a report generation method, which is performed by a terminal and includes:
Step S501: obtaining successful primary secondary cell (PSCell) report (SPR) trigger condition configuration information; and
Step S502: generating an SPR during a secondary node (SN) addition procedure or a PSCell change procedure according to the SPR trigger condition configuration information.

It should be noted that the embodiment of the present disclosure is mainly applicable to the MR-DC scenario. Through the embodiment of the present disclosure, the SPR can be generated during the SN addition procedure or the PSCell change procedure, so as to assist a network side in configuration optimization.

It should be noted that the SPR trigger condition configuration information in the embodiment of the present disclosure includes at least one of:
a timer T304 threshold, a timer T310 threshold, or a timer T312 threshold.

It should be noted that the embodiment of the present disclosure provides two modes of obtaining the SPR trigger condition configuration information, which are described in detail as follows.

Mode 1: the network side configures two sets of configurations of SPR trigger conditions for the terminal

Optionally, in this case, the SPR trigger condition configuration information includes: the SPR trigger condition configuration information configured by an MN and/or the SPR trigger condition configuration information configured by a preset SN;
the preset SN includes a first SN and/or a second SN.

It should be noted that the first SN is an SN corresponding to a source PSCell before change; and the second SN is an SN corresponding to a target PSCell after change.

It should be noted that when the SPR trigger condition configuration information is configured by the preset SN, the second SN can only configure the T304 timer threshold in the SPR trigger condition configuration information, and the first SN can only configure the T310 timer threshold and/or the T312 timer threshold in the SPR trigger condition configuration information. When the SPR trigger condition configuration information is configured by the MN, the MN can configure at least one of the T304 timer threshold, the T310 timer threshold or the T312 timer threshold in the SPR trigger condition configuration information.

Optionally, the SPR trigger condition configuration information configured by the MN is obtained as follows:
receiving the SPR trigger condition configuration information configured by the MN sent by the MN.

That is, the MN may directly send the SPR trigger condition configuration information configured by itself to the terminal.

Optionally, the SPR trigger condition configuration information configured by the preset SN is obtained as follows.

A11: receiving the SPR trigger condition configuration information configured by the first SN and sent by the first SN through a signaling radio bearer 3 (SRB3).

It should be noted that since there may be a connection between the terminal and the first SN, the first SN may directly send the SPR trigger condition configuration information configured by itself to the terminal. Optionally, in this case, the SPR trigger condition configuration information includes the T310 timer threshold and/or the T312 timer threshold.

A12: receiving the SPR trigger condition configuration information configured by the preset SN and sent by the MN, wherein the SPR trigger condition configuration information configured by the preset SN is sent to the MN by the preset SN through an inter-node message.

It should be noted that since both the second SN and the first SN may be in communication with the MN, the first SN and/or the second SN may send the SPR trigger condition configuration information configured by itself to the MN through an XN interface, and the MN send the SPR trigger condition configuration information configured by the first SN and/or the second SN to the terminal.

Optionally, the SPR trigger condition configuration information configured by the first SN and/or the second SN may be included in an inter-node message, sent to the MN in the form of a container, and then sent to the terminal by the MN.

It should be further noted that the terminal logs and saves the SPR trigger condition configuration information configured by the MN and/or the SPR trigger condition configuration information configured by the preset SN, respectively, and the terminal may store the SPR trigger condition configuration information configured by the MN and the SPR trigger condition configuration information configured by the preset SN in different terminal variables, respectively.

Optionally, as illustrated in Fig. 6, an implementation of the Step S502 includes the following steps S5021 to S5023.

Step S5021: in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN.

Optionally, the target cell refers to a target PSCell accessed by the terminal after the PSCell change.

Optionally, the SN addition procedure can only be triggered by the MN, and when the terminal acknowledges the SN addition, it can be directly determined that the trigger node corresponding to the SN addition procedure is the MN.

It should be noted that when the terminal executes the SN addition procedure, the SPR trigger condition configuration information only includes the T304 timer threshold, and may support the configuration in advance through the RRC reconfiguration message. Alternatively, in the case of the SN addition procedure, the T304 timer threshold may be configured by the second SN, included in the inter-node message to be sent to the MN, and then sent to the terminal by the MN.

Optionally, the PSCell change procedure may be triggered by the MN or the first SN, and the terminal needs to determine, based on an indication from the network side, the trigger node corresponding to the target cell triggering the PSCell change procedure, which specifically includes the following cases.

### Case I: unconditional PSCell change

Optionally, in this case, the method further includes:
receiving first indication information sent by the MN and/or the first SN, wherein the first indication information is used for indicating the trigger node corresponding to the target cell triggering the PSCell change procedure.

That is, in this case, the network side notifies the terminal whether the trigger node is the MN or the first SN through the first indication information.

Optionally, the first indication information may use 1 bit to indicate whether the trigger node is the MN or the first SN. For example, when a bit value is 1, it means that the trigger node is the MN, and when the bit value is 0, it means that the trigger node is the first SN. For example, when the bit value is 0, it means that the trigger node is the MN, and when the bit value is 1, it means that the trigger node is the first SN. Alternatively, the first indication information may be an enumeration type {MN-initiated, SN-initiated), or the first indication information may indicate a more specific type of the PSCell change, such as {MN-initiated PSCell change, SN-initiated PSCell change, intra-SN PSCell change without MN involvement}.

Optionally, the receiving the first indication information sent by the MN includes:
receiving a first message sent by the MN, the first message carrying the first indication information.

The first message includes at least one of the following items.

A21: a radio resource control (RRC) reconfiguration message.

Optionally, in one case, the RRC reconfiguration message may be a synchronized RRC reconfiguration message.

A22: a PSCell change command.

It should be noted that the PSCell change command may be regarded as a synchronized RRC reconfiguration message.

Specifically, the PSCell change command is sent to the MN by the second SN through an inter-node message after receiving the first indication information sent by the MN.

### Case II: conditional PSCell change

Optionally, in this case, the method further includes:
receiving conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

That is, in the case of the conditional PSCell change, when configuring the conditional PSCell target candidate cell configuration list information, the network side should additionally configure, for each node (i.e., each information) in the list, a trigger node corresponding to a target cell triggering a target candidate PSCell change procedure, in addition to the identification information of the target candidate PSCell and the change execution condition corresponding to the target candidate PSCell. When executing the PSCell change procedure after change execution condition is met, the terminal determines the trigger node corresponding to the target cell after change is the MN or the first SN based on the above configurations.

It should be further noted that the terminal logs and saves the conditional PSCell target candidate cell configuration list information, and when the trigger conditions of the conditional PSCell change are met, selects SPR trigger conditions configured by the MN or the SN to judge the generation of the SPR during the execution of the conditional PSCell change, depending on the fact whether the target PSCell is triggered and configured by the MN or the first SN. In which, 1 bit may be used to indicate whether the trigger node is the MN or the SN, or the trigger node may be indicated with an enumeration type {MN-initiated CPC, SN-initiated CPC}, or a more specific CPC type such as {MN-initiated inter-SN CPC, SN-initiated inter-SN CPC, intra-SN CPC}.

That is, when the terminal executes the PSCell change procedure, the SPR trigger condition configuration information may be at least one of the timer T304 threshold, the timer T310 threshold or the timer T312 threshold. The SPR trigger condition configuration information may support the configuration of at least one of the timer T304 threshold, the timer T310 threshold or the timer T312 threshold in advance through the RRC reconfiguration message. Alternatively, in the case of the PSCell change, the T304 timer threshold may be configured by the target PSCell, included in an inter-node message to be sent to the MN, and then sent to the terminal by the MN.

S5022: determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN.

It should be noted that when the trigger node is the MN, the target SPR trigger condition configuration information for the generation of the SPR is the the SPR trigger condition configuration information configured for the MN; and when the trigger node is the first SN, the target SPR trigger condition configuration information for the generation of the SPR is the SPR trigger condition configuration information configured by the first SN and/or the second SN.

Step S5023: generating the SPR during the SN addition procedure or the PSCell change procedure according to the target SPR trigger condition configuration information.

It should be further noted that when the trigger node is the MN, but the terminal does not obtain the SPR trigger condition configuration information configured by the MN, the terminal does not generate the SPR during the SN addition procedure or the PSCell change procedure; and when the trigger node is the first SN, but the terminal does not obtain the SPR trigger condition configuration information configured by the first SN and/or the second SN, the terminal does not generate the SPR during the SN addition procedure or the PSCell change procedure.

Mode II: the network side configures one set of configurations of SPR trigger conditions for the terminal.

Optionally, in this case, an implementation of the Step S501 includes one of:
B 11: receiving the SPR trigger condition configuration information sent by an MN; and
B 12: receiving the SPR trigger condition configuration information sent by a first SN through an SRB3.

That is, the terminal may obtain the SPR trigger condition configuration information from the MN or the first SN.

It should be noted that the SPR trigger condition configuration information may be under a complete control or a partial control of the network side. Optionally, in the case of the complete control of the network side, an implementation of the Step 502 includes:
in a case that the SN addition procedure or the PSCell change procedure is to be executed, generating the SPR during the SN addition procedure or the PSCell change procedure according to the SPR trigger condition configuration information.

That is, in this case, as long as the terminal executes the SN addition procedure or the PSCell change procedure, it is necessary to generate the SPR based on the obtained SPR trigger condition configuration information during the SN addition procedure or the PSCell change procedure.

Optionally, in the case of the partial control of the network side, the method further includes:
receiving configuration node information corresponding to the SPR trigger condition configuration information, wherein the configuration node information is sent by the MN or the first SN.

Optionally, in the case of the partial control of the network side, as illustrated in Fig. 7, an implementation of the Step S502 includes the following steps S 5024 and S5025.

Step S5024: in a case that the SN addition procedure or the PSCell change procedure is to be executed, determining a trigger node corresponding to the SN addition procedure or a trigger node corresponding to a target cell triggering the PSCell change procedure, wherein the trigger node includes the MN or the first SN.

Optionally, the target cell refers to a target PSCell accessed by the terminal after the PSCell change.

Optionally, the SN addition procedure can only be triggered by the MN, and when the terminal acknowledges the SN addition, it can be directly determined that the trigger node corresponding to the SN addition procedure is the MN.

Optionally, the PSCell change procedure may be triggered by the MN or the first SN, and the terminal needs to determine, based on an indication from the network side, the trigger node corresponding to the target cell triggering the PSCell change procedure, which specifically includes the following cases.

### Case I: unconditional PSCell change

Optionally, in this case, the method further includes:
receiving first indication information sent by the MN and/or the first SN, wherein the first indication information is used for indicating the trigger node corresponding to the target cell triggering the PSCell change procedure.

That is, in this case, the network side notifies the terminal whether the trigger node is the MN or the first SN through the first indication information.

Optionally, the first indication information may use 1 bit to indicate whether the trigger node is the MN or the first SN. For example, when a bit value is 1, it means that the trigger node is the MN, and when the bit value is 0, it means that the trigger node is the first SN. For example, when the bit value is 0, it means that the trigger node is the MN, and when the bit value is 1, it means that the trigger node is the first SN. Alternatively, the first indication information may be an enumeration type {MN-initiated, SN-initiated), or the first indication information may indicate a more specific type of the PSCell change, such as {MN-initiated PSCell change, SN-initiated PSCell change, intra-SN PSCell change without MN involvement}.

Optionally, the receiving the first indication information sent by the MN includes:
receiving a first message sent by the MN, the first message carrying the first indication information.

The first message includes at least one of the following items.

B21: a radio resource control (RRC) reconfiguration message.

Optionally, in one case, the RRC reconfiguration message may be a synchronized RRC reconfiguration message.

B22: a PSCell change command.

It should be noted that the PSCell change command may be regarded as a synchronized RRC reconfiguration message.

Specifically, the PSCell change command is sent to the MN by the second SN through an inter-node message after receiving the first indication information sent by the MN.

### Case II: conditional PSCell change

Optionally, in this case, the method further includes:
receiving conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

That is, in the case of the conditional PSCell change, when configuring the conditional PSCell target candidate cell configuration list information, the network side should additionally configure, for each node (i.e., each information) in the list, a trigger node corresponding to a target cell triggering a target candidate PSCell change procedure, in addition to the identification information of the target candidate PSCell and the change execution condition corresponding to the target candidate PSCell. When executing the PSCell change procedure after change execution condition is met, the terminal determines the trigger node corresponding to the target cell after change is the MN or the first SN based on the above configurations.

S5025: in a case that the SPR trigger condition configuration information corresponds to the trigger node, generating the SPR during the SN addition procedure or the PSCell change procedure according to the SPR trigger condition configuration information.

That is, when the SPR trigger condition configuration information is configured by the trigger node, the SPR is generated during the SN addition procedure or the PSCell change procedure. It should be further noted that when the SPR trigger condition configuration information obtained by the terminal is not configured by the trigger node, the terminal does not generate the SPR during the SN addition procedure or the PSCell change procedure.

It should be further noted that in a case that one set of configurations of SPR trigger conditions are configured for the terminal, the MN should negotiate the SPR trigger condition configuration information with the first SN, and then the negotiated SPR trigger condition configuration information may be sent to the terminal by the MN or the first SN.

Specifically, the process of negotiation may adopt one of the following modes.

Mode I: the MN sends a second message to the first SN, wherein the second message includes the SPR trigger condition configuration information configured by the MN.

It should be noted that under this mode, in one case, the MN directly notifies the first SN to use the SPR trigger condition configuration information configured by the MN without a permission of the first SN. In another case, the MN only determines to use the SPR trigger condition configuration information configured by the MN with the permission of the first SN. Optionally, after sending the second message to the first SN, the MN needs to receive, from the first SN, a fourth message which indicates the first SN to acknowledge or reject the SPR trigger condition configuration information configured by the MN. When the first SN rejects the SPR trigger condition configuration information configured by the MN, the SPR trigger condition configuration information may be configured by the first SN.

Mode 2: the MN receives a third message sent by the first SN, wherein the third message includes the SPR trigger condition configuration information configured by the first SN.

It should be noted that under this mode, in one case, the first SN directly notifies the MN to use the SPR trigger condition configuration information configured by the first SN without a permission of the MN. In another case, the first SN only determines to use the SPR trigger condition configuration information configured by the first SN with the permission of the MN. Optionally, after receiving the third message sent by the first SN, the MN needs to send, to the first SN, a fifth message which indicates the MN to acknowledge or reject the SPR trigger condition configuration information configured by the first SN. When the MN rejects the SPR trigger condition configuration information configured by the first SN, the SPR trigger condition configuration information may be configured by the MN.

Further, the main process of determining the configuration node information corresponding to the SPR trigger condition configuration information after negotiation includes one of:
C11: when being proposed by the MN and acknowledged by the first SN, the SPR trigger condition configuration information is considered as that configured by the MN;
C12: when being proposed by the first SN and acknowledged by the MN, the SPR trigger condition configuration information is considered as that configured by the first SN;
C13: when being proposed by the MN but finally acknowledged as the SPR trigger condition configuration information of the first SN after negotiation, the SPR trigger condition configuration information is considered as that configured by the first SN;
C14: when being proposed by the first SN but finally acknowledged as the SPR trigger condition configuration information of the MN after negotiation, the SPR trigger condition configuration information is considered as that configured by the MN;
C15: when being proposed by the MN and notified to the first SN, the SPR trigger condition configuration information is considered as that configured by the MN; and
C16: when being proposed by the first SN and notified to the MN, the SPR trigger condition configuration information is considered as that configured by the first SN.

To sum up, the embodiment of the present disclosure provides a configuration mode that supports the SPR trigger condition configuration information in the MR-DC scenario, which can ensure the smooth generation of the SPR by the terminal, so as to ensure that the network side can perform network optimization and guarantee the communication reliability.

The technical solutions according to the embodiments of the present disclosure are applicable to various systems, in particular 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE frequency division duplex (FDD) system, an LTE time division duplex (TDD) system, a Long Term Evolution Advanced (LTE-A) system, a universal mobile telecommunication system (UMTS), a worldwide interoperability for microwave access (WiMAX) system, a 5G New Radio (NR) system, etc. These various systems each include a terminal (also called terminal device) and a network device. The system may further include a core network part, such as an evolved packet system (EPS), a 5G System (5GS), etc.

The terminal (also called terminal device) involved in the embodiments of the present disclosure may refer to a device providing voice and/or data connectivity to a user, a handheld device having a wireless connection function, any other processing device connected to a wireless modem, etc. In different systems, the name of the terminal device may be different, and for example, in a 5G system, the terminal device may be referred to as user equipment (UE). The wireless terminal device may be communicated with one or more core networks (CNs) via a radio access network (RAN). The wireless terminal device may be a mobile terminal device such as a mobile phone (or referred to as a "cellular" phone) or a computer with a mobile terminal device, such as a portable, pocket-sized, handheld, computer-embedded or vehicle-mounted mobile device, which exchanges speech and/or data with the radio access network. For example, the terminal device may be a personal communication service (PCS) phone, a cordless phone, a session initiated protocol (SIP) phone, a wireless local loop (WLL) station, a personal digital assistant (PDA), or the like. The wireless terminal device may also be referred to as a system, a subscriber unit, a subscribe station, a mobile station, a mobile, a remote station, an access point, a remote terminal, an access terminal, a user terminal, a user agent, and a user device, which are not limited in the embodiments of the present disclosure.

The network device involved in the embodiments of the present disclosure may be a base station, which may include a plurality of cells that provide services to the terminal. Depending on the specific application scenarios, the base station may also be referred to as an access point, or a device in an access network which is communicated with the wireless terminal device over an air interface through one or more sectors, or have other names. The network device may be used to exchange the received air frames with an Internet Protocol (IP) packet, so as to serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (base transceiver station, BTS) in global system for mobile communications (GSM) or code division multiple access (CDMA), or a network device (NodeB) in wide-band dode division multiple access (WCDMA), or an evolutional network device (evolutional NodeB, eNB or e-NodeB) in a Long Term Evolution (LTE) system, or a 5G base station (gNB) in a 5G network architecture (next generation system), or a Home evolved Node B (HeNB), a relay node, a femto, a pico, etc., which is not limited in the embodiments of the present disclosure. In some network architectures, the network device may include a centralized unit (CU) node and a distributed unit (DU) node, and a CU and a DU may also be geographically separated.

The network device and the terminal device may each use one or more antennas to perform multi input multi output (MIMO) transmission which may be single user MIMO (SU-MIMO) or multiple user MIMO (MU-MIMO). Depending on the form and the number of the antenna combinations, the MIMO transmission may be 2-dimension MIMO (2D MIMO), 3-dimension MIMO (3D MIMO), full dimension MIMO (FD-MIMO) or massive-MIMO, and may also be diversity transmission or precoding transmission or beamforming transmission, etc.

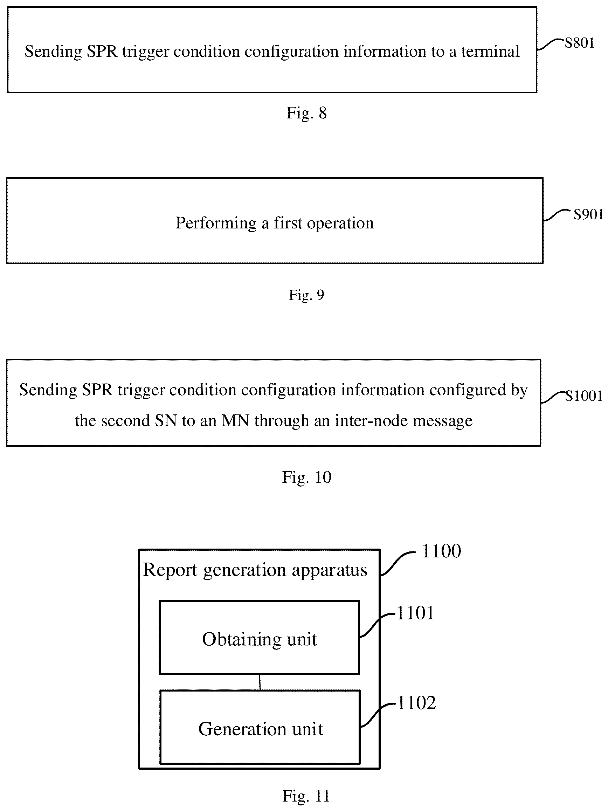

As illustrated in Fig. 8, an embodiment of the present disclosure provides an information transmission method, which is performed by an MN and includes:
Step S801: sending SPR trigger condition configuration information to a terminal.

Optionally, the sending the SPR trigger condition configuration information to the terminal includes:
sending the SPR trigger condition configuration information configured by the MN and/or the SPR trigger condition configuration information configured by a preset SN to the terminal;
wherein the preset SN includes a first SN and/or a second SN.

Optionally, the method further includes:
receiving the SPR trigger condition configuration information configured by the preset SN and sent by the preset SN through an inter-node message.

Optionally, the sending the SPR trigger condition configuration information to the terminal includes:
negotiating the SPR trigger condition configuration information with a first SN; and
sending the negotiated SPR trigger condition configuration information to the terminal.

Optionally, the negotiating the SPR trigger condition configuration information with the first SN includes:
sending a second message to the first SN, wherein the second message includes the SPR trigger condition configuration information configured by the MN; or
receiving a third message sent by the first SN, wherein the third message includes the SPR trigger condition configuration information configured by the first SN.

Optionally, after the sending the second message to the first SN, the method further includes:
receiving a fourth message sent by the first SN, wherein the fourth message is used for indicating that the first SN acknowledges or rejects the SPR trigger condition configuration information configured by the MN.

Optionally, after the receiving the third message sent by the first SN, the method further includes:
sending a fifth message to the first SN, wherein the fifth message is used for indicating that the MN acknowledges or rejects the SPR trigger condition configuration information configured by the first SN.

Optionally, the method further includes:
sending configuration node information corresponding to the SPR trigger condition configuration information to the terminal.

Optionally, the method further includes:
sending first indication information to the terminal, wherein the first indication information is used for indicating a trigger node corresponding to a target cell triggering a PSCell change procedure, and the trigger node includes the MN or the first SN.

Optionally, the sending the first indication information to the terminal includes:
sending a first message to the terminal, the first message carrying the first indication information;
wherein the first message includes at least one of a radio resource control (RRC) reconfiguration message or a PSCell change command.

Optionally, in a case that the first message includes the PSCell change command, the method further includes:
sending first indication information to a second SN; and
receiving an inter-node message sent by the second SN, wherein the inter-node message carries the PSCell change command.

Optionally, the method further includes:
sending conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

It should be noted that all the implementations in the above embodiment are applicable to the embodiments of the information transmission method applied to an MN side, and can achieve the same technical effects, which will not be repeated here.

As illustrated in Fig. 9, an embodiment of the present disclosure provides an information transmission method, which is performed by a first SN and includes:
Step S901: performing a first operation;
wherein the first operation includes one of:
   sending SPR trigger condition configuration information configured by the first SN to a terminal;
   sending the SPR trigger condition configuration information configured by the first SN to an MN through an inter-node message; and
   negotiating the SPR trigger condition configuration information with the MN.

Optionally, the method further includes:
sending first indication information to the terminal, wherein the first indication information is used for indicating a trigger node corresponding to a target cell triggering a PSCell change procedure;
wherein the trigger node includes the MN or the first SN.

Optionally, the method further includes:
sending conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure;
wherein the trigger node includes the MN or the first SN.

Optionally, the negotiating the SPR trigger condition configuration information with the MN includes:
receiving a second message sent by the MN, wherein the second message includes the SPR trigger condition configuration information configured by the MN; or
sending a third message to the MN, wherein the third message includes the SPR trigger condition configuration information configured by the first SN.

Optionally, after the receiving the second message sent by the MN, the method further includes:
sending a fourth message to the MN, wherein the fourth message is used for indicating that the first SN acknowledges or rejects the SPR trigger condition configuration information configured by the MN.

Optionally, after the sending the third message to the MN, the method further includes:
receiving a fifth message sent by the MN, wherein the fifth message is used for indicating that the MN acknowledges or rejects the SPR trigger condition configuration information configured by the first SN.

It should be noted that all the implementations in the above embodiment are applicable to the embodiments of the information transmission method applied to the side of the first SN, and can achieve the same technical effects, which will not be repeated here.

As illustrated in Fig. 10, an embodiment of the present disclosure provides an information transmission method, which is performed by a second SN and includes:
Step S1001: sending SPR trigger condition configuration information configured by the second SN to an MN through an inter-node message.

Optionally, the method further includes:
receiving first indication information sent by the MN, wherein the first indication information is used for indicating a trigger node corresponding to a target cell triggering a PSCell change procedure, and the trigger node includes the MN or a first SN; and
sending the inter-node message to the MN, wherein the inter-node message carries a PSCell change command that includes the first indication information.

It should be noted that all the implementations in the above embodiment are applicable to the embodiments of the information transmission method applied to the side of the second SN, and can achieve the same technical effects, which will not be repeated here.

As illustrated in Fig. 11, an embodiment of the present disclosure provides a report generation apparatus 1100, which is applied to a terminal and includes:
an obtaining unit 1101 configured to obtain SPR trigger condition configuration information; and
a generation unit 1102 configured to generate an SPR during an SN addition procedure or a PSCell change procedure according to the SPR trigger condition configuration information.

Optionally, the SPR trigger condition configuration information includes: the SPR trigger condition configuration information configured by an MN and/or the SPR trigger condition configuration information configured by a preset SN;
the preset SN includes a first SN and/or a second SN.

Optionally, the SPR trigger condition configuration information configured by the MN is obtained by:
receiving the SPR trigger condition configuration information configured by the MN and sent by the MN.

Optionally, the SPR trigger condition configuration information configured by the preset SN is obtained by:
receiving the SPR trigger condition configuration information configured by the first SN and sent by the first SN through a signaling radio bearer 3 (SRB3); or
receiving the SPR trigger condition configuration information configured by the preset SN and sent by the MN, wherein the SPR trigger condition configuration information configured by the preset SN is sent to the MN by the preset SN through an inter-node message.

Optionally, the generation unit 1102 is configured to:
in a case that the SN addition procedure or the PSCell change procedure is to be executed, determine a trigger node corresponding to the SN addition procedure or a trigger node corresponding to a target cell triggering the PSCell change procedure, wherein the trigger node includes the MN or the first SN;
determine, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generate the SPR during the SN addition procedure or the PSCell change procedure according to the target SPR trigger condition configuration information.

Optionally, the obtaining unit 1101 is configured to:
receive SPR trigger condition configuration information sent by an MN; or
receive SPR trigger condition configuration information sent by a first SN through an SRB3.

Optionally, the generation unit 1102 is configured to:
in a case that the SN addition procedure or the PSCell change procedure is to be executed, generate the SPR during the SN addition procedure or the PSCell change procedure according to the SPR trigger condition configuration information.

Optionally, the generation unit 1102 is configured to:
in a case that the SN addition procedure or the PSCell change procedure is to be executed, determine a trigger node corresponding to the SN addition procedure or a trigger node corresponding to a target cell triggering the PSCell change procedure, wherein the trigger node includes the MN or the first SN; and
in a case that the SPR trigger condition configuration information corresponds to the trigger node, generate the SPR during the SN addition procedure or the PSCell change procedure according to the SPR trigger condition configuration information.

Optionally, the apparatus further includes:
a first receiving unit configured to receive configuration node information corresponding to the SPR trigger condition configuration information sent by the MN or the first SN.

Optionally, the apparatus further includes:
a second receiving unit configured to receive first indication information sent by the MN and/or the first SN, wherein the first indication information is used for indicating the trigger node corresponding to the target cell triggering the PSCell change procedure.

Optionally, the receiving first indication information sent by the MN includes:
receiving a first message sent by the MN, the first message carrying the first indication information;
wherein the first message includes at least one of a radio resource control (RRC) reconfiguration message or a PSCell change command;
the PSCell change command is sent to the MN by the second SN through an inter-node message after receiving the first indication information sent by the MN.

Optionally, the apparatus further includes:
a third receiving unit configured to receive conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

It should be noted that the apparatus embodiments are in one-to-one correspondence with the above method embodiments, so all the implementations in the method embodiments are applicable to the apparatus embodiments and the same technical effects can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

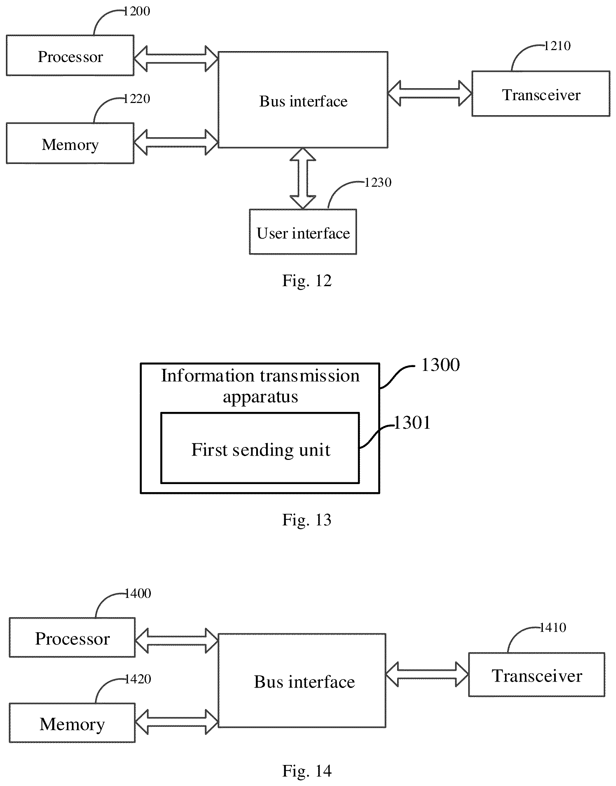

As illustrated in Fig. 12, an embodiment of the present disclosure further provides a terminal, which includes a processor 1200, a transceiver 1210, a memory 1220, and a program stored in the memory 1220 and runnable in the processor 1200; wherein the transceiver 1210 is connected to the processor 1200 and the memory 1220 through a bus interface, and wherein the processor 1200 is configured to read the program in the memory and perform the following steps:
obtaining SPR trigger condition configuration information; and
generating an SPR during an SN addition procedure or a PSCell change procedure according to the SPR trigger condition configuration information.

The transceiver 1210 is configured to receive and transmit data under the control of the processor 1200.

In which, in Fig. 12, a bus architecture may include any number of interconnected buses and bridges, and specifically various circuits of one or more processors represented by the processor 1200 and the memory represented by the memory 1220 are linked together. The bus architecture may also link together various other circuits, such as a peripheral device, a voltage stabilizer, a power management circuit, etc., which are well known in the art and not further described herein. The bus interface provides an interface. The transceiver 1210 may be composed of a plurality of elements, i.e., including a transmitter and a receiver, so as to provide units for communication with various other devices over a transmission medium including a wireless channel, a wired channel, a fiber optic cable, or the like. For different user equipment, the user interface 1230 may also be an interface capable of externally or internally connecting a desired device including, but not limited to, a keypad, a display, a speaker, a microphone, a joystick, or the like.

The processor 1200 is responsible for managing a bus architecture and general processing, and the memory 1220 may store data used by the processor 1200 in performing operations.

Optionally, the processor 1200 may be a central processing unit (CPU), an application specific integrated circuit (ASIC), a field-programmable gate array (FPGA), or a complex programmable logic device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

Optionally, the SPR trigger condition configuration information includes: SPR trigger condition configuration information configured by the MN and/or SPR trigger condition configuration information configured by the preset SN;
the preset SN includes a first SN and/or a second SN.

Optionally, the processor is configured to read the computer program in the memory and perform the following step:
receiving, by the transceiver, the SPR trigger condition configuration information configured by the MN and sent by the MN.

Optionally, the processor is configured to read the computer program in the memory and perform the following steps:
receiving, by the transceiver, the SPR trigger condition configuration information configured by the first SN and sent by the first SN through a signaling radio bearer 3 (SRB3); or
receiving, by the transceiver, the SPR trigger condition configuration information configured by the preset SN and sent by the MN, wherein the SPR trigger condition configuration information configured by the preset SN is sent to the MN by the preset SN through an inter-node message.

Optionally, the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node includes an MN or a first SN;
determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generating the SPR during the SN addition procedure or the PSCell change procedure according to the target SPR trigger condition configuration information.

Optionally, the processor is configured to read the computer program in the memory and perform the following steps:
receiving, by the transceiver, the SPR trigger condition configuration information sent by an MN; or
receiving, by the transceiver, the SPR trigger condition configuration information sent by a first SN through an SRB3.

Optionally, the processor is configured to read the computer program in the memory and perform the following step:
in a case that the SN addition procedure or the PSCell change procedure is to be executed, generating the SPR during the SN addition procedure or the PSCell change procedure according to the SPR trigger condition configuration information.

Optionally, the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node includes an MN or a first SN; and
in a case that the SPR trigger condition configuration information corresponds to the trigger node, generating the SPR during the SN addition procedure or the PSCell change procedure according to the SPR trigger condition configuration information.

Optionally, the processor is configured to read the computer program in the memory and perform the following step:
receiving, by the transceiver, configuration node information corresponding to the SPR trigger condition configuration information, wherein the configuration node information is sent by the MN or the first SN.

Optionally, the processor is configured to read the computer program in the memory and perform the following step:
receiving, by the transceiver, first indication information sent by the MN and/or the first SN, wherein the first indication information is used for indicating a trigger node corresponding to a target cell triggering the PSCell change procedure.

Optionally, the processor is configured to read the computer program in the memory and perform the following step:
receiving, by the transceiver, a first message sent by the MN, the first message carrying the first indication information;
wherein the first message includes at least one of a radio resource control (RRC) reconfiguration message or a PSCell change command;
the PSCell change command is sent to the MN by the second SN through an inter-node message after receiving the first indication information sent by the MN.

Optionally, the processor is configured to read the computer program in the memory and perform the following step:
receiving conditional PSCell target candidate cell configuration list information sent by the MN or the first SN, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

It should be noted that the above terminal according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the report generation method applied to the terminal. The processor-readable storage medium may be any available medium or data storage device accessible to the processor, including but not limited to, a magnetic storage (e.g., a floppy disk, a hard disk, a magnetic tape, magnetooptical (MO) disk, etc.), an optical storage (e.g., a compact disc (CD), a digital video disc (DVD), a blu-ray disc (BD), a high-definition versatile disc (HVD), etc.), and a semiconductor memory (e.g., a read-only memory (ROM), an erasable programmable ROM (EPROM), an electrically EPROM (EEPROM), an NAND FLASH, a solid state disk or solid state drive (SSD)), etc.

As illustrated in Fig. 13, an embodiment of the present disclosure provides an information transmission apparatus 1300, which is applied to an MN and includes:
a first sending unit 1301 configured to send SPR trigger condition configuration information to a terminal.

Optionally, the first sending unit 1301 is configured to:
send the SPR trigger condition configuration information configured by the MN and/or the SPR trigger condition configuration information configured by a preset SN to the terminal;
wherein the preset SN includes a first SN and/or a second SN.

Optionally, the apparatus further includes:
a fourth receiving unit configured to receive the SPR trigger condition configuration information configured by the preset SN and sent by the preset SN through an inter-node message.

Optionally, the first sending unit 1301 is configured to:
negotiate the SPR trigger condition configuration information with a first SN; and
send the negotiated SPR trigger condition configuration information to the terminal.

Optionally, the negotiating the SPR trigger condition configuration information with the first SN includes:
sending a second message to the first SN, wherein the second message includes the SPR trigger condition configuration information configured by the MN; or
receiving a third message sent by the first SN, wherein the third message includes the SPR trigger condition configuration information configured by the first SN.

Optionally, after the sending the second message to the first SN, the apparatus further includes:
a fifth receiving unit configured to receive a fourth message sent by the first SN, wherein the fourth message is used for indicating that the first SN acknowledges or rejects the SPR trigger condition configuration information configured by the MN.

Optionally, after the receiving the third message sent by the first SN, the apparatus further includes:
a third sending unit configured to send a fifth message to the first SN, wherein the fifth message is used for indicating that the MN acknowledges or rejects the SPR trigger condition configuration information configured by the first SN.

Optionally, the apparatus further includes:
a fourth sending unit configured to send configuration node information corresponding to the SPR trigger condition configuration information to the terminal.

Optionally, the apparatus further includes:
a fifth sending unit configured to send first indication information to the terminal, wherein the first indication information is used for indicating the trigger node corresponding to the target cell triggering the PSCell change procedure, and the trigger node includes the MN or the first SN.

Optionally, the fifth sending unit is configured to:
send a first message to the terminal, the first message carrying the first indication information;
wherein the first message includes at least one of a radio resource control (RRC) reconfiguration message or a PSCell change command.

Optionally, in a case that the first message includes the PSCell change command, the apparatus further includes:
a sixth sending unit configured to send first indication information to a second SN; and
a sixth receiving unit configured to receive an inter-node message sent by the second SN, wherein the inter-node message carries the PSCell change command.

Optionally, the apparatus further includes:
a seventh sending unit configured to send conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

It should be noted that the apparatus embodiments are in one-to-one correspondence with the above method embodiments, so all the implementations in the method embodiments are applicable to the apparatus embodiments and the same technical effects can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

As illustrated in Fig. 14, an embodiment of the present disclosure further provides an MN, which includes a processor 1400, a transceiver 1410, a memory 1420, and a program stored in the memory 1420 and runnable in the processor 1400; wherein the transceiver 1410 is connected to the processor 1400 and the memory 1420 through a bus interface, and wherein the processor 1400 is configured to read the program in the memory and perform the steps of:
sending, by the transceiver 1410, SPR trigger condition configuration information to a terminal.

The transceiver 1410 is configured to receive and transmit data under the control of the processor 1400.

In which, in Fig. 14, a bus architecture may include any number of interconnected buses and bridges, and specifically various circuits of one or more processors represented by the processor 1400 and the memory represented by the memory 1420 are linked together. The bus architecture may also link together various other circuits, such as a peripheral device, a voltage stabilizer, a power management circuit, etc., which are well known in the art and not further described herein. The bus interface provides an interface. The transceiver 1410 may be composed of a plurality of elements, i.e., including a transmitter and a receiver, so as to provide units for communication with various other devices over a transmission medium including a wireless channel, a wired channel, a fiber optic cable, or the like. For different user equipment, the user interface 1230 may also be an interface capable of externally or internally connecting a desired device including, but not limited to, a keypad, a display, a speaker, a microphone, a joystick, or the like.

The processor 1400 is responsible for managing a bus architecture and general processing, and the memory 1420 may store data used by the processor 1400 in performing operations.

Optionally, the processor 1400 may be a central processing unit (CPU), an application specific integrated circuit (ASIC), a field-programmable gate array (FPGA), or a complex programmable logic device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

Optionally, the processor is configured to read the computer program in the memory and perform the following steps:
sending, by the transceiver, the SPR trigger condition configuration information configured by the MN and/or the SPR trigger condition configuration information configured by a preset SN;
wherein the preset SN includes a first SN and/or a second SN.

Optionally, the processor is configured to read the computer program in the memory and perform the following step:
receiving, by the transceiver, the SPR trigger condition configuration information configured by the preset SN and sent by the preset SN through an inter-node message.

Optionally, the processor is configured to read the computer program in the memory and perform the following steps:
negotiating the SPR trigger condition configuration information with a first SN; and
sending the negotiated SPR trigger condition configuration information to the terminal.

Optionally, Optionally, the processor is configured to read the computer program in the memory and perform the following steps:
sending a second message to the first SN, wherein the second message includes the SPR trigger condition configuration information configured by the MN; or
receiving a third message sent by the first SN, wherein the third message includes the SPR trigger condition configuration information configured by the first SN.

Optionally, the processor is configured to read the computer program in the memory and perform the following step:
receiving, by the transceiver, a fourth message sent by the first SN, wherein the fourth message is used for indicating that the first SN acknowledges or rejects the SPR trigger condition configuration information configured by the MN.

Optionally, the processor is configured to read the computer program in the memory and perform the following step:
sending, by the transceiver, a fifth message to the first SN, wherein the fifth message is used for indicating that the MN acknowledges or rejects the SPR trigger condition configuration information configured by the first SN.

Optionally, the processor is configured to read the computer program in the memory and perform the following step:
sending, by the transceiver, configuration node information corresponding to the SPR trigger condition configuration information to the terminal.

Optionally, the processor is configured to read the computer program in the memory and perform the following step:
sending first indication information to the terminal, wherein the first indication information is used for indicating a trigger node corresponding to a target cell triggering a PSCell change procedure, and the trigger node includes the MN or the first SN.

Optionally, the processor is configured to read the computer program in the memory and perform the following step:
sending, by the transceiver, a first message to the terminal, the first message carrying the first indication information;
wherein the first message includes at least one of a radio resource control (RRC) reconfiguration message or a PSCell change command.

Optionally, in a case that the first message includes the PSCell change command, the processor is configured to read the computer program in the memory and perform the following steps:
sending, by the transceiver, first indication information to a second SN; and
receiving, by the transceiver, an inter-node message sent by the second SN, wherein the inter-node message carries the PSCell change command.

Optionally, the processor is configured to read the computer program in the memory and perform the following step:
sending, by the transceiver, conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure.

Optionally, the first SN is an SN corresponding to a source PSCell before change; and/or
the second SN is an SN corresponding to a target PSCell after change.

It should be noted that the above MN according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the information transmission method applied to an MN. The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a blu-ray disc (BD), a high-definition versatile disc (HVD), etc.), and a semiconductor memory (e.g., a read-only memory (ROM), an erasable programmable ROM (EPROM), an electrically EPROM (EEPROM), an NAND FLASH, a solid state disk or solid state drive (SSD)), etc.

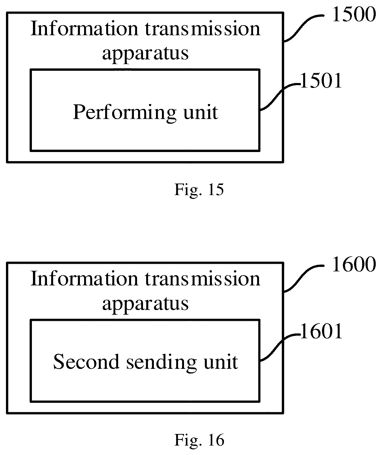

As illustrated in Fig. 15, an embodiment of the present disclosure provides an information transmission apparatus 1500, which is applied to a first SN and includes:
a performing unit 1501 configured to perform a first operation;
wherein the first operation includes one of:
   sending SPR trigger condition configuration information configured by the first SN to a terminal;
   sending SPR trigger condition configuration information configured by the first SN to an MN through an inter-node message; and
   negotiating the SPR trigger condition configuration information with the MN.

Optionally, the apparatus further includes:
an eighth sending unit configured to send first indication information to the terminal, wherein the first indication information is used for indicating the trigger node corresponding to the target cell triggering the PSCell change procedure;
wherein the trigger node includes the MN or the first SN.

Optionally, the apparatus further includes:
a ninth sending unit configured to send conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure;
wherein the trigger node includes the MN or the first SN.

Optionally, the negotiating the SPR trigger condition configuration information with the MN includes:
receiving a second message sent by the MN, wherein the second message includes the SPR trigger condition configuration information configured by the MN; or
sending a third message to the MN, wherein the third message includes the SPR trigger condition configuration information configured by the first SN.

Optionally, after the receiving the second message sent by the MN, the apparatus further includes:
a tenth sending unit configured to send a fourth message to the MN, wherein the fourth message is used for indicating that the first SN acknowledges or rejects the SPR trigger condition configuration information configured by the MN.

Optionally, after the sending the third message to the MN, the apparatus further includes:
a seventh receiving unit configured to receive a fifth message sent by the MN, wherein the fifth message is used for indicating that the MN acknowledges or rejects the SPR trigger condition configuration information configured by the first SN.

It should be noted that the apparatus embodiments are in one-to-one correspondence with the above method embodiments, so all the implementations in the method embodiments are applicable to the apparatus embodiments and the same technical effects can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

An embodiment of the present disclosure further provides an SN, which is a first SN, and the structure thereof has been illustrated in Fig. 14, which is not repeated here.

In which, the processor is configured to read the computer program in the memory and perform the following steps:
performing a first operation;
wherein the first operation includes one of:
   sending SPR trigger condition configuration information configured by the first SN to a terminal;
   sending the SPR trigger condition configuration information configured by the first SN to an MN through an inter-node message; and
   negotiating the SPR trigger condition configuration information with the MN.

Optionally, the processor is configured to read the computer program in the memory and perform the following step:
sending, by the transceiver, first indication information to the terminal, wherein the first indication information is used for indicating the trigger node corresponding to the target cell triggering the PSCell change procedure;
wherein the trigger node includes the MN or the first SN.

Optionally, the processor is configured to read the computer program in the memory and perform the following step:
sending, by the transceiver, conditional PSCell target candidate cell configuration list information to the terminal, wherein each node in the conditional PSCell target candidate cell configuration list information includes identification information of a target candidate PSCell, a change execution condition corresponding to the target candidate PSCell, and a trigger node corresponding to a target cell triggering a target candidate PSCell change procedure;
wherein the trigger node includes the MN or the first SN.

Optionally, the processor is configured to read the computer program in the memory and perform the following steps:
receiving, by the transceiver, a second message sent by the MN, wherein the second message includes the SPR trigger condition configuration information configured by the MN; or
sending, by the transceiver, a third message to the MN, wherein the third message includes the SPR trigger condition configuration information configured by the first SN.

Optionally, the processor is configured to read the computer program in the memory and perform the following step:
sending, by the transceiver, a fourth message to the MN, wherein the fourth message is used for indicating that the first SN acknowledges or rejects the SPR trigger condition configuration information configured by the MN.

Optionally, the processor is configured to read the computer program in the memory and perform the following step:
receiving, by the transceiver, a fifth message sent by the MN, wherein the fifth message is used for indicating that the MN acknowledges or rejects the SPR trigger condition configuration information configured by the first SN.

**It** should be noted that the above terminal according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the information transmission method method applied to the first SN. The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a blu-ray disc (BD), a high-definition versatile disc (HVD), etc.), and a semiconductor memory (e.g., a read-only memory (ROM), an erasable programmable ROM (EPROM), an electrically EPROM (EEPROM), an NAND FLASH, a solid state disk or solid state drive (SSD)), etc.

As shown in Fig. 16, an embodiment of the present disclosure provides an information transmission apparatus 1600, which is applied to a second SN and includes:
a second sending unit 1601 configured to send SPR trigger condition configuration information configured by the second SN to an MN through an inter-node message.

Optionally, the apparatus further includes:
an eighth receiving unit configured to receive first indication information sent by the MN, wherein the first indication information is used for indicating the trigger node corresponding to the target cell triggering the PSCell change procedure, and the trigger node includes the MN or a first SN; and
an eleventh sending unit configured to send an inter-node message to the MN, wherein the inter-node message carries a PSCell change command that includes the first indication information.

It should be noted that the apparatus embodiments are in one-to-one correspondence with the above method embodiments, so all the implementations in the method embodiments are applicable to the apparatus embodiments and the same technical effects can be achieved.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

An embodiment of the present disclosure further provides an SN, which is a second SN, and the structure thereof has been illustrated in Fig. 14, which is not repeated here.

In which, the processor is configured to read the computer program in the memory and perform the following step:
sending, by the transceiver, SPR trigger condition configuration information configured by the second SN to an MN through an inter-node message.

Optionally, the processor is configured to read the computer program in the memory and perform the following steps:
receiving, by the transceiver, first indication information sent by the MN, wherein the first indication information is used for indicating the trigger node corresponding to the target cell triggering the PSCell change procedure, and the trigger node includes the MN or the first SN; and
sending, by the transceiver, an inter-node message to the MN, wherein the inter-node message carries a PSCell change command that includes the first indication information.

It should be noted that the above terminal according to the embodiment of the present disclosure can implement all methodical steps implemented by the above method embodiments, and can achieve the same technical effects, so the parts and the advantageous effects of this embodiment the same as those of the method embodiments will not be described in detail.

The embodiments of the present disclosure further provide a processor-readable storage medium which stores a computer program, wherein when executed by a processor, the computer program implements the steps of the information transmission method applied to the second SN. The processor-readable storage medium may be any available medium or data storage device accessible to the processor, including but not limited to, a magnetic storage (e.g., a floppy disk, a hard disk, a magnetic tape, magneto-optical (MO) disk, etc.), an optical storage (e.g., a compact disc (CD), a digital video disc (DVD), a blu-ray disc (BD), a high-definition versatile disc (HVD), etc.), and a semiconductor memory (e.g., a read-only memory (ROM), an erasable programmable ROM (EPROM), an electrically EPROM (EEPROM), an NAND FLASH, a solid state disk or solid state drive (SSD)), etc.

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a disk storage, an optical storage, etc.) containing computer-usable program codes.

The present disclosure is described with reference to the flowcharts and/or the block diagrams of the method, the apparatus (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. These computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

## Claims

1. A report generation method performed by a terminal, the method comprising:
obtaining successful primary secondary cell (PSCell) report (SPR) trigger condition configuration information; and
generating an SPR during a secondary node (SN) addition procedure or a PSCell change procedure according to the SPR trigger condition configuration information.

2. The method according to claim 1, wherein the SPR trigger condition configuration information comprises: the SPR trigger condition configuration information configured by a master node (MN) and/or the SPR trigger condition configuration information configured by a preset SN;
the preset SN comprises a first SN and/or a second SN.

3. The method according to claim 2, wherein the SPR trigger condition configuration information configured by the MN is obtained by:
receiving the SPR trigger condition configuration information configured by the MN and sent by the MN.

4. The method according to claim 2, wherein the SPR trigger condition configuration information configured by the preset SN is obtained by:
receiving the SPR trigger condition configuration information configured by the first SN and sent by the first SN through a signaling radio bearer 3 (SRB3); or
receiving the SPR trigger condition configuration information configured by the preset SN and sent by the MN, wherein the SPR trigger condition configuration information configured by the preset SN is sent to the MN by the preset SN through an inter-node message.

5. The method according to claim 2, wherein the generating the SPR during the SN addition procedure or the PSCell change procedure according to the SPR trigger condition configuration information comprises:
in a case that the SN addition procedure or the PSCell change procedure is to be executed, determining a trigger node corresponding to the SN addition procedure or a trigger node corresponding to a target cell triggering the PSCell change procedure, wherein the trigger node comprises the MN or the first SN;
determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generating the SPR during the SN addition procedure or the PSCell change procedure according to the target SPR trigger condition configuration information.

6. The method according to claim 1, wherein the obtaining the SPR trigger condition configuration information comprises:
receiving the SPR trigger condition configuration information sent by an MN; or
receiving the SPR trigger condition configuration information sent by a first SN through an SRB3.

7. The method according to claim 6, wherein the generating the SPR during the SN addition procedure or the PSCell change procedure according to the SPR trigger condition configuration information comprises:
in a case that the SN addition procedure or the PSCell change procedure is to be executed, generating the SPR during the SN addition procedure or the PSCell change procedure according to the SPR trigger condition configuration information.

8. The method according to claim 6, wherein the generating the SPR during the SN addition procedure or the PSCell change procedure according to the SPR trigger condition configuration information comprises:
in a case that the SN addition procedure or the PSCell change procedure is to be executed, determining a trigger node corresponding to the SN addition procedure or a trigger node corresponding to a target cell triggering the PSCell change procedure, wherein the trigger node comprises the MN or the first SN; and
in a case that the SPR trigger condition configuration information corresponds to the trigger node, generating the SPR during the SN addition procedure or the PSCell change procedure according to the SPR trigger condition configuration information.

9. The method according to claim 8, further comprising:
receiving configuration node information corresponding to the SPR trigger condition configuration information, wherein the configuration node information is sent by the MN or the first SN.

10. The method according to claim 5 or 8, further comprising:
receiving first indication information sent by the MN and/or the first SN, wherein the first indication information is used for indicating the trigger node corresponding to the target cell triggering the PSCell change procedure.

11. The method according to claim 10, wherein the receiving the first indication information sent by the MN comprises:
receiving a first message sent by the MN, the first message carrying the first indication information;
wherein the first message comprises at least one of a radio resource control (RRC) reconfiguration message or a PSCell change command; and
the PSCell change command is sent to the MN by the second SN through an inter-node message after receiving the first indication information sent by the MN.

12. The method according to claim 5 or 8, further comprising:
receiving conditional PSCell target candidate cell configuration list information sent by the MN or the first SN, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

13. The method according to any one of claims 2, 4, 5, 6, 8, 9, 10, 11 and 12, wherein the first SN is an SN corresponding to a source PSCell before change; and/or
the second SN is an SN corresponding to a target PSCell after change.

14. An information transmission method performed by a master node (MN), the method comprising:
sending successful primary secondary cell (PSCell) report (SPR) trigger condition configuration information to a terminal.

15. The method according to claim 14, wherein the sending the SPR trigger condition configuration information to the terminal comprises:
sending the SPR trigger condition configuration information configured by the MN and/or the SPR trigger condition configuration information configured by a preset secondary node (SN) to the terminal;
wherein the preset SN comprises a first SN and/or a second SN.

16. The method according to claim 15, further comprising:
receiving the SPR trigger condition configuration information configured by the preset SN and sent by the preset SN through an inter-node message.

17. The method according to claim 14, wherein the sending the SPR trigger condition configuration information to the terminal comprises:
negotiating the SPR trigger condition configuration information with a first SN; and
sending the negotiated SPR trigger condition configuration information to the terminal.

18. The method according to claim 17, wherein the negotiating the SPR trigger condition configuration information with the first SN comprises:
sending a second message to the first SN, wherein the second message comprises the SPR trigger condition configuration information configured by the MN; or
receiving a third message sent by the first SN, wherein the third message comprises the SPR trigger condition configuration information configured by the first SN.

19. The method according to claim 18, wherein after the sending the second message to the first SN, the method further comprises:
receiving a fourth message sent by the first SN, wherein the fourth message is used for indicating that the first SN acknowledges or rejects the SPR trigger condition configuration information configured by the MN.

20. The method according to claim 18, wherein after the receiving the third message sent by the first SN, the method further comprises:
sending a fifth message to the first SN, wherein the fifth message is used for indicating that the MN acknowledges or rejects the SPR trigger condition configuration information configured by the first SN.

21. The method according to claim 17, further comprising:
sending configuration node information corresponding to the SPR trigger condition configuration information to the terminal.

22. The method according to claim 14, further comprising:
sending first indication information to the terminal, wherein the first indication information is used for indicating a trigger node corresponding to a target cell triggering a PSCell change procedure, and the trigger node comprises the MN or a first SN.

23. The method according to claim 22, wherein the sending the first indication information to the terminal comprises:
sending a first message to the terminal, the first message carrying the first indication information;
wherein the first message comprises at least one of a radio resource control (RRC) reconfiguration message or a PSCell change command.

24. The method according to claim 23, wherein in a case that the first message comprises the PSCell change command, the method further comprises:
sending first indication information to a second SN; and
receiving an inter-node message sent by the second SN, wherein the inter-node message carries the PSCell change command.

25. The method according to claim 14, further comprising:
sending conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

26. The method according to any one of claims 15 to 25, wherein the first SN is an SN corresponding to a source PSCell before change; and/or
the second SN is an SN corresponding to a target PSCell after change.

27. An information transmission method performed by a first secondary node (SN), the method comprising:
performing a first operation;
wherein the first operation comprises one of:
sending successful primary secondary cell (PSCell) report (SPR) trigger condition configuration information configured by the first SN to a terminal;
sending the SPR trigger condition configuration information configured by the first SN to a master node (MN) through an inter-node message; and
negotiating the SPR trigger condition configuration information with the MN.

28. The method according to claim 27, further comprising:
sending first indication information to the terminal, wherein the first indication information is used for indicating a trigger node corresponding to a target cell triggering a PSCell change procedure;
wherein the trigger node comprises the MN or the first SN.

29. The method according to claim 27, further comprising:
sending conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure;
wherein the trigger node comprises the MN or the first SN.

30. The method according to claim 27, wherein the negotiating the SPR trigger condition configuration information with the MN comprises:
receiving a second message sent by the MN, wherein the second message comprises the SPR trigger condition configuration information configured by the MN; or
sending a third message to the MN, wherein the third message comprises the SPR trigger condition configuration information configured by the first SN.

31. The method according to claim 30, wherein after the receiving the second message sent by the MN, the method further comprises:
sending a fourth message to the MN, wherein the fourth message is used for indicating that the first SN acknowledges or rejects the SPR trigger condition configuration information configured by the MN.

32. The method according to claim 30, wherein after the sending the third message to the MN, the method further comprises:
receiving a fifth message sent by the MN, wherein the fifth message is used for indicating that the MN acknowledges or rejects the SPR trigger condition configuration information configured by the first SN.

33. An information transmission method performed by a second secondary node (SN), the method comprising:
sending successful primary secondary cell (PSCell) report (SPR) trigger condition configuration information configured by the second SN to a master node (MN) through an inter-node message.

34. The method according to claim 33, further comprising:
receiving first indication information sent by the MN, wherein the first indication information is used for indicating a trigger node corresponding to a target cell triggering a PSCell change procedure, and the trigger node comprises the MN or a first SN; and
sending the inter-node message to the MN, wherein the inter-node message carries a PSCell change command that comprises the first indication information.

35. A terminal, comprising a memory, a transceiver, and a processor:
the memory is configured to store a computer program; the transceiver is configured to transmit and receive data under the control of the processor; and the processor is configured to read the computer program in the memory and perform the following steps:
obtaining successful primary secondary cell (PSCell) report (SPR) trigger condition configuration information; and
generating an SPR during a secondary node (SN) addition procedure or a PSCell change procedure according to the SPR trigger condition configuration information.

36. The terminal according to claim 35, wherein the SPR trigger condition configuration information comprises: the SPR trigger condition configuration information configured by a master node (MN) and/or the SPR trigger condition configuration information configured by a preset SN; and
the preset SN comprises a first SN and/or a second SN.

37. The terminal according to claim 36, wherein the processor is configured to read the computer program in the memory and perform the following step:
receiving, by the transceiver, the SPR trigger condition configuration information configured by the MN and sent by the MN.

38. The terminal according to claim 36, wherein the processor is configured to read the computer program in the memory and perform the following steps:
receiving, by the transceiver, the SPR trigger condition configuration information configured by the first SN and sent by the first SN through a signaling radio bearer 3 (SRB3); or
receiving, by the transceiver, the SPR trigger condition configuration information configured by the preset SN and sent by the MN, wherein the SPR trigger condition configuration information configured by the preset SN is sent to the MN by the preset SN through an inter-node message.

39. The terminal according to claim 36, wherein the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node comprises the MN or the first SN;
determining, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generating the SPR during the SN addition procedure or the PSCell change procedure according to the target SPR trigger condition configuration information.

40. The terminal according to claim 35, wherein the processor is configured to read the computer program in the memory and perform the following steps:
receiving, by the transceiver, the SPR trigger condition configuration information sent by an MN; or
receiving, by the transceiver, the SPR trigger condition configuration information sent by a first SN through an SRB3.

41. The terminal according to claim 40, wherein the processor is configured to read the computer program in the memory and perform the following step:
in a case that the SN addition procedure or the PSCell change procedure is to be executed, generating the SPR during the SN addition procedure or the PSCell change procedure according to the SPR trigger condition configuration information.

42. The terminal according to claim 40, wherein the processor is configured to read the computer program in the memory and perform the following steps:
in a case that the SN addition procedure or the PSCell change procedure is to be executed, determining a trigger node corresponding to the SN addition procedure or a trigger node corresponding to a target cell triggering the PSCell change procedure, wherein the trigger node comprises the MN or the first SN; and
in a case that the SPR trigger condition configuration information corresponds to the trigger node, generating the SPR during the SN addition procedure or the PSCell change procedure according to the SPR trigger condition configuration information.

43. The terminal according to claim 42, wherein the processor is configured to read the computer program in the memory and perform the following step:
receiving, by the transceiver, configuration node information corresponding to the SPR trigger condition configuration information, wherein the configuration node information is sent by the MN or the first SN.

44. The terminal according to claim 39 or 42, wherein the processor is configured to read the computer program in the memory and perform the following step:
receiving, by the transceiver, first indication information sent by the MN and/or the first SN, wherein the first indication information is used for indicating the trigger node corresponding to the target cell triggering the PSCell change procedure.

45. The terminal according to claim 44, wherein the processor is configured to read the computer program in the memory and perform the following step:
receiving, by the transceiver, a first message sent by the MN, the first message carrying the first indication information;
wherein the first message comprises at least one of a radio resource control (RRC) reconfiguration message or a PSCell change command;
the PSCell change command is sent to the MN by the second SN through an inter-node message after receiving the first indication information sent by the MN.

46. The terminal according to claim 39 or 42, wherein the processor is configured to read the computer program in the memory and perform the following step:
receiving conditional PSCell target candidate cell configuration list information sent by the MN or the first SN, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

47. The terminal according to any one of claims 36, 38, 39, 40, 42, 43, 44, 45 and 46, wherein the first SN is an SN corresponding to a source PSCell before change; and/or
the second SN is an SN corresponding to a target PSCell after change.

48. A master node (MN), comprising a memory, a transceiver and a processor:
the memory is configured to store a computer program; the transceiver is configured to transmit and receive data under the control of the processor; and the processor is configured to read the computer program in the memory and perform the following steps:
sending, by the transceiver, successful primary secondary cell (PSCell) report (SPR) trigger condition configuration information to a terminal.

49. The MN according to claim 48, wherein the processor is configured to read the computer program in the memory and perform the following step:
sending, by the transceiver, the SPR trigger condition configuration information configured by the MN and/or the SPR trigger condition configuration information configured by a preset secondary node (SN) to the terminal;
wherein the preset SN comprises a first SN and/or a second SN.

50. The MN according to claim 49, wherein the processor is configured to read the computer program in the memory and perform the following step:
receiving, by the transceiver, the SPR trigger condition configuration information configured by the preset SN and sent by the preset SN through an inter-node message.

51. The MN according to claim 48, wherein the processor is configured to read the computer program in the memory and perform the following steps:
negotiating the SPR trigger condition configuration information with a first SN; and
sending the negotiated SPR trigger condition configuration information to the terminal.

52. The MN according to claim 51, wherein the processor is configured to read the computer program in the memory and perform the following steps:
sending a second message to the first SN, wherein the second message comprises the SPR trigger condition configuration information configured by the MN; or
receiving a third message sent by the first SN, wherein the third message comprises the SPR trigger condition configuration information configured by the first SN.

53. The MN according to claim 52, wherein the processor is configured to read the computer program in the memory and perform the following step:
receiving, by the transceiver, a fourth message sent by the first SN, wherein the fourth message is used for indicating that the first SN acknowledges or rejects the SPR trigger condition configuration information configured by the MN.

54. The MN according to claim 52, wherein the processor is configured to read the computer program in the memory and perform the following step:
sending, by the transceiver, a fifth message to the first SN, wherein the fifth message is used for indicating that the MN acknowledges or rejects the SPR trigger condition configuration information configured by the first SN.

55. The MN according to claim 51, wherein the processor is configured to read the computer program in the memory and perform the following step:
sending, by the transceiver, configuration node information corresponding to the SPR trigger condition configuration information to the terminal.

56. The MN according to claim 48, wherein the processor is configured to read the computer program in the memory and perform the following step:
sending first indication information to the terminal, wherein the first indication information is used for indicating a trigger node corresponding to a target cell triggering a PSCell change procedure, and the trigger node comprises the MN or a first SN.

57. The MN according to claim 56, wherein the processor is configured to read the computer program in the memory and perform the following step:
sending, by the transceiver, a first message to the terminal, the first message carrying the first indication information;
wherein the first message comprises at least one of a radio resource control (RRC) reconfiguration message or a PSCell change command.

58. The MN according to claim 57, wherein in a case that the first message comprises the PSCell change command, the processor is configured to read the computer program in the memory and perform the following steps:
sending, by the transceiver, first indication information to a second SN; and
receiving, by the transceiver, an inter-node message sent by the second SN, wherein the inter-node message carries the PSCell change command.

59. The MN according to claim 48, wherein the processor is configured to read the computer program in the memory and perform the following step:
sending, by the transceiver, conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

60. The MN according to any one of claims 49 to 59, wherein the first SN is an SN corresponding to a source PSCell before change; and/or
the second SN is an SN corresponding to a target PSCell after change.

61. A secondary node (SN), which is a first SN, comprising a memory, a transceiver, and a processor:
the memory is configured to store a computer program; the transceiver is configured to transmit and receive data under the control of the processor; and the processor is configured to read the computer program in the memory and perform the following steps:
performing a first operation;
wherein the first operation comprises one of:
sending successful primary secondary cell (PSCell) report (SPR) trigger condition configuration information configured by the first SN to a terminal;
sending the SPR trigger condition configuration information configured by the first SN to a master node (MN) through an inter-node message; and
negotiating the SPR trigger condition configuration information with the MN.

62. The SN according to claim 61, wherein the processor is configured to read the computer program in the memory and perform the following step:
sending, by the transceiver, first indication information to the terminal, wherein the first indication information is used for indicating a trigger node corresponding to a target cell triggering a PSCell change procedure;
wherein the trigger node comprises the MN or the first SN.

63. The SN according to claim 61, wherein the processor is configured to read the computer program in the memory and perform the following step:
sending, by the transceiver, conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure;
wherein the trigger node comprises the MN or the first SN.

64. The SN according to claim 61, wherein the processor is configured to read the computer program in the memory and perform the following steps:
receiving, by the transceiver, a second message sent by the MN, wherein the second message comprises the SPR trigger condition configuration information configured by the MN; or
sending, by the transceiver, a third message to the MN, wherein the third message comprises the SPR trigger condition configuration information configured by the first SN.

65. The SN according to claim 64, wherein the processor is configured to read the computer program in the memory and perform the following step:
sending, by the transceiver, a fourth message to the MN, wherein the fourth message is used for indicating that the first SN acknowledges or rejects the SPR trigger condition configuration information configured by the MN.

66. The SN according to claim 64, wherein the processor is configured to read the computer program in the memory and perform the following step:
receiving, by the transceiver, a fifth message sent by the MN, wherein the fifth message is used for indicating that the MN acknowledges or rejects the SPR trigger condition configuration information configured by the first SN.

67. A secondary node (SN), which is a second SN, comprising a memory, a transceiver, and a processor:
the memory is configured to store a computer program; the transceiver is configured to transmit and receive data under the control of the processor; and the processor is configured to read the computer program in the memory and perform the following step:
sending, by the transceiver, successful primary secondary cell (PSCell) report (SPR) trigger condition configuration information configured by the second SN to a master node (MN) through an inter-node message.

68. The SN according to claim 67, wherein the processor is configured to read the computer program in the memory and perform the following steps:
receiving, by the transceiver, first indication information sent by the MN, wherein the first indication information is used for indicating a trigger node corresponding to a target cell triggering a PSCell change procedure, and the trigger node comprises the MN or a first SN; and
sending, by the transceiver, the inter-node message to the MN, wherein the inter-node message carries a PSCell change command that comprises the first indication information.

69. A report generation apparatus applied to a terminal, the apparatus comprising:
an obtaining unit, configured to obtain successful primary secondary cell (PSCell) report (SPR) trigger condition configuration information; and
a generation unit, configured to generate an SPR during a secondary node (SN) addition procedure or a PSCell change procedure according to the SPR trigger condition configuration information.

70. The apparatus according to claim 69, wherein the SPR trigger condition configuration information comprises the SPR trigger condition configuration information configured by a master node (MN) and/or the SPR trigger condition configuration information configured by a preset secondary node (SN); and
the preset SN comprises a first SN and/or a second SN.

71. The apparatus according to claim 70, wherein the SPR trigger condition configuration information configured by the MN is obtained by:
receiving the SPR trigger condition configuration information configured by the MN and sent by the MN.

72. The apparatus according to claim 70, wherein the SPR trigger condition configuration information configured by the preset SN is obtained by:
receiving the SPR trigger condition configuration information configured by the first SN and sent by the first SN through a signaling radio bearer 3 (SRB3); or
receiving the SPR trigger condition configuration information configured by the preset SN and sent by the MN, wherein the SPR trigger condition configuration information configured by the preset SN is sent to the MN by the preset SN through an inter-node message.

73. The apparatus according to claim 70, wherein the generation unit is configured to:
in a case that the SN addition procedure or the PSCell change procedure is to be executed, determine a trigger node corresponding to the SN addition procedure or a trigger node corresponding to a target cell triggering the PSCell change procedure, wherein the trigger node comprises the MN or the first SN;
determine, according to the trigger node, target SPR trigger condition configuration information used for generating the SPR, wherein the target SPR trigger condition configuration information is the SPR trigger condition configuration information configured by the MN or the SPR trigger condition configuration information configured by the preset SN; and
generate the SPR during the SN addition procedure or the PSCell change procedure according to the target SPR trigger condition configuration information.

74. The apparatus according to claim 69, wherein the obtaining unit is configured to:
receive the SPR trigger condition configuration information sent by an MN; or
receive the SPR trigger condition configuration information sent by a first SN through an SRB3.

75. The apparatus according to claim 74, wherein the generation unit is configured to:
in a case that the SN addition procedure or the PSCell change procedure is to be executed, generate the SPR during the SN addition procedure or the PSCell change procedure according to the SPR trigger condition configuration information.

76. The apparatus according to claim 74, wherein the generation unit is configured to:
in a case that the SN addition procedure or the PSCell change procedure is to be executed, determine a trigger node corresponding to the SN addition procedure or a trigger node corresponding to a target cell triggering the PSCell change procedure, wherein the trigger node comprises the MN or the first SN; and
in a case that the SPR trigger condition configuration information corresponds to the trigger node, generate the SPR during the SN addition procedure or the PSCell change procedure according to the SPR trigger condition configuration information.

77. The apparatus according to claim 76, further comprising:
a first receiving unit, configured to receive configuration node information corresponding to the SPR trigger condition configuration information sent by the MN or the first SN.

78. The apparatus according to claim 76, further comprising:
a second receiving unit, configured to receive first indication information sent by the MN and/or the first SN, wherein the first indication information is used for indicating the trigger node corresponding to the target cell triggering the PSCell change procedure.

79. The apparatus according to claim 78, wherein the receiving the first indication information sent by the MN comprises:
receiving a first message sent by the MN, the first message carrying the first indication information;
wherein the first message comprises at least one of a radio resource control (RRC) reconfiguration message or a PSCell change command;
the PSCell change command is sent to the MN by a second SN through an inter-node message after receiving the first indication information sent by the MN.

80. The apparatus according to claim 76, further comprising:
a third receiving unit, configured to receive conditional PSCell target candidate cell configuration list information sent by the MN or the first SN, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

81. The apparatus according to any one of claims 70, 72 to 74 and 76 to 80, wherein the first SN is an SN corresponding to a source PSCell before change; and/or
the second SN is an SN corresponding to a target PSCell after change.

82. An information transmission apparatus applied to a master node (MN), the apparatus comprising:
a first sending unit, configured to send successful primary secondary cell (PSCell) report (SPR) trigger condition configuration information to a terminal.

83. The apparatus according to claim 82, wherein the first sending unit is configured to:
send the SPR trigger condition configuration information configured by the MN and/or the SPR trigger condition configuration information configured by a preset secondary node (SN) to the terminal;
wherein the preset SN comprises a first SN and/or a second SN.

84. The apparatus according to claim 83, further comprising:
a fourth receiving unit configured to receive the SPR trigger condition configuration information configured by the preset SN and sent by the preset SN through an inter-node message.

85. The apparatus according to claim 82, wherein the first sending unit is configured to:
negotiate the SPR trigger condition configuration information with a first SN; and
send the negotiated SPR trigger condition configuration information to the terminal.

86. The apparatus according to claim 85, wherein the negotiating the SPR trigger condition configuration information with the first SN comprises:
sending a second message to the first SN, wherein the second message comprises the SPR trigger condition configuration information configured by the MN; or
receiving a third message sent by the first SN, wherein the third message comprises the SPR trigger condition configuration information configured by the first SN.

87. The apparatus according to claim 86, wherein after the sending the second message to the first SN, the apparatus further comprises:
a fifth receiving unit, configured to receive a fourth message sent by the first SN, wherein the fourth message is used for indicating that the first SN acknowledges or rejects the SPR trigger condition configuration information configured by the MN.

88. The apparatus according to claim 86, wherein after the receiving the third message sent by the first SN, the apparatus further comprises:
a third sending unit, configured to send a fifth message to the first SN, wherein the fifth message is used for indicating that the MN acknowledges or rejects the SPR trigger condition configuration information configured by the first SN.

89. The apparatus according to claim 85, further comprising:
a fourth sending unit, configured to send configuration node information corresponding to the SPR trigger condition configuration information to the terminal.

90. The apparatus according to claim 82, further comprising:
a fifth sending unit, configured to send first indication information to the terminal, wherein the first indication information is used for indicating a trigger node corresponding to a target cell triggering a PSCell change procedure, and the trigger node comprises the MN or a first SN.

91. The apparatus according to claim 90, wherein the fifth sending unit is configured to:
send a first message to the terminal, the first message carrying the first indication information;
wherein the first message comprises at least one of a radio resource control (RRC) reconfiguration message or a PSCell change command.

92. The apparatus according to claim 91, wherein in a case that the first message comprises the PSCell change command, the apparatus further comprises:
a sixth sending unit, configured to send first indication information to a second SN; and
a sixth receiving unit, configured to receive an inter-node message sent by the second SN, wherein the inter-node message carries the PSCell change command.

93. The apparatus according to claim 82, further comprising:
a seventh sending unit, configured to send conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure.

94. The apparatus according to any one of claims 83 to 93, wherein the first SN is an SN corresponding to a source PSCell before change; and/or
the second SN is an SN corresponding to a target PSCell after change.

95. An information transmission apparatus applied to a first secondary node (SN), the apparatus comprising:
a performing unit configured to perform a first operation;
wherein the first operation comprises one of:
sending successful primary secondary cell (PSCell) report (SPR) trigger condition configuration information configured by the first SN to a terminal;
sending SPR trigger condition configuration information configured by the first SN to a master node (MN) through an inter-node message; and
negotiating the SPR trigger condition configuration information with the MN.

96. The apparatus according to claim 95, further comprising:
an eighth sending unit, configured to send first indication information to the terminal, wherein the first indication information is used for indicating a trigger node corresponding to a target cell triggering a PSCell change procedure;
wherein the trigger node comprises the MN or the first SN.

97. The apparatus according to claim 95, further comprising:
a ninth sending unit, configured to send conditional PSCell target candidate cell configuration list information to the terminal, wherein each node in the conditional PSCell target candidate cell configuration list information comprises identification information of a target candidate PSCell, a change execution condition corresponding to the target candidate PSCell, and a trigger node corresponding to a target cell triggering a target candidate PSCell change procedure;
wherein the trigger node comprises the MN or the first SN.

98. The apparatus according to claim 95, wherein the negotiating the SPR trigger condition configuration information with the MN comprises:
receiving a second message sent by the MN, wherein the second message comprises the SPR trigger condition configuration information configured by the MN; or
sending a third message to the MN, wherein the third message comprises the SPR trigger condition configuration information configured by the first SN.

99. The apparatus according to claim 98, wherein after the receiving the second message sent by the MN, the apparatus further comprises:
a tenth sending unit, configured to send a fourth message to the MN, wherein the fourth message is used for indicating that the first SN acknowledges or rejects the SPR trigger condition configuration information configured by the MN.

100. The apparatus according to claim 98, wherein after the sending the third message to the MN, the apparatus further comprises:
a seventh receiving unit, configured to receive a fifth message sent by the MN, wherein the fifth message is used for indicating that the MN acknowledges or rejects the SPR trigger condition configuration information configured by the first SN.

101. An information transmission apparatus applied to a second secondary node (SN), the apparatus comprising:
a second sending unit, configured to send successful primary secondary cell (PSCell) report (SPR) trigger condition configuration information configured by the second SN to a master node (MN) through an inter-node message.

102. The apparatus according to claim 101, further comprising:
an eighth receiving unit, configured to receive first indication information sent by the MN, wherein the first indication information is used for indicating a trigger node corresponding to a target cell triggering a PSCell change procedure, and the trigger node comprises the MN or a first SN; and
an eleventh sending unit, configured to send the inter-node message to the MN, wherein the inter-node message carries a PSCell change command that comprises the first indication information.

103. A processor-readable storage medium storing a computer program, wherein the computer program is configured to, when being executed by a processor, cause the processor to perform the method according to any one of claims 1 to 34.
